# EUROPEAN PATENT APPLICATION

(11) **EP 4 507 448 A1**
(43) Date of publication of application: **12.02.2025**
(21) Application number: 23802668.6
(22) Date of filing: 27.04.2023
(51) Int. Cl.: H04W 76/27, H04W 68/00

(54) **METHOD AND APPARATUS USED FOR COMMUNICATION NODE FOR WIRELESS COMMUNICATION**

(30) Priority: 11.05.2022 CN 202210510466; 23.05.2022 CN 202210560312
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Zhang, Fan
(86) International application number: PCT/CN2023/091019
(87) International publication number: WO 2023/216895

(57) **Abstract**

Disclosed in the present application are a method and apparatus used for a communication node for wireless communication. The method comprises: a communication node receiving a first message in an RRC inactive state, the first message comprising a first identifier, and the first identifier being associated with a first node; if the first message does not give an instruction to perform data transmission in the RRC inactive state, setting a first domain in a second message as a first value, and not resuming each radio bearer in a first radio bearer set; if the first message gives an instruction to perform data transmission in the RRC inactive state, setting the first domain in the second message as a second value, and resuming each radio bearer in the first radio bearer set, the second message comprising an RRC connection resume request message, and the first domain being used for indicating the reason of the RRC connection resume request; and sending the second message, the first radio bearer set comprising at least one of SRB2 or DRB or multicast MRB, the first value being one of a first candidate value set, and the second value being one of a second candidate value set.

## Description

### TECHNICAL FIELD

The present application relates to transmission methods and devices in wireless communication systems, and in particular to a method and a device for small data transmission.

### BACKGROUND

New Radio (NR) supports Radio Resource Control_INACTIVE (RRC _INACTIVE) State till the 3rd Generation Partnership Project (3GPP) Rel-16 in which transmitting or receiving data in the RRC_INACTIVE state is not supported. Rel-17 conducted a Work Item (WI) on "Small Data Transmission (SDT) in NR Inactive state", which developed a technical specification for MO (UL (Uplink))-SDT to allow small packet transmission that transmits UL-oriented small packets in the RRC inactive state. MO-SDT consists of two modes, RA (i.e., Random Access)-SDT and CG (i.e., Configured Grant)-SDT, where CG-SDT sends uplink data on preconfigured PUSCH (i.e., Physical Uplink Shared Channel) resources. While RA-SDT carries data using a Message 3 (Msg3) or Message B (MsgB) during Random Access (RA); Rel-17 carried out the work item of "Receiving MBS (i.e., Multicast/Broadcast Service) in RRC connected state". In order to reduce power consumption, signaling overhead and delay, Rel-18 established the "MT (DL (Downlink))-SDT (Mobile Terminated-Small Data Transmission)" work item to study the MT-SDT triggering mechanism. Besides, RA-SDT and CG-SDT are supported as uplink responses, and the MT-SDT procedure for initial DL data reception and subsequent UL/DL data transmissions in RRC inactive state will be investigated.

### SUMMARY

In the existing protocol, when a UE (i.e., User Equipment) receives a Paging Message in RRC inactive state, as a response to having received the Paging Message, the UE initiates an RRC connection Resume procedure, and sends an RRC connection resumption request message during an RRC resume procedure. For the RRC connection resume procedure triggered by a paging message, the UE can perform downlink data reception only when it receives an RRC connection resume message and resumes all radio bearers. For MT-SDT, in order to shorten the delay, a feasible solution is to resume the radio bearers used for MT-SDT in advance, and the base station sends downlink data in advance. The base station cannot determine whether the UE has resumed the radio bearers for MT-SDT based on the existing RRC connection resumption request message, which has an impact on the initial downlink data transmission. Therefore, for MT-SDT, the RRC connection resumption procedure needs to be enhanced.

To address the above problem, the present application provides a solution for small data transmission. In the description of the above problem, a MT-SDT in RRC inactive state is used as an example; the present application is also equally applicable to scenarios such as multicast MBS in RRC inactive state, where technical effects similar to the MT-SDT in RRC inactive state can be achieved. Further, though originally targeted at the Uu air interface, the present application also applies to the PC5 interface. Further, the present application is designed targeting terminal-base station scenario, but can be extended to Vehicle-to-Everything (V2X), terminal-relay communications, as well as relay-base station communications, where similar technical effects can be achieved. Further, the present application is designed targeting terminal-base station scenario, but can be extended to Integrated Access and Backhaul (IAB) communications, where similar technical effects can be achieved. Further, although the present application is intended for Terrestrial Network (TN) scenarios, the present application is also applicable to Non-Terrestrial Network (NTN) communication scenarios, where technical effects similar to those in TN scenarios can be achieved. Additionally, the adoption of a unified solution for various scenarios contributes to the reduction of hardcore complexity and costs.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

In one embodiment, a problem to be solved in the present application includes: how to indicate MT-SDT in an RRC resumption request message.

In one embodiment, a problem to be solved in the present application includes: how to set the resumeCause in the RRC resumption request message.

In one embodiment, a problem to be solved in the present application includes: how to determine a radio bearer being used for data transmission in the RRC inactive state.

In one embodiment, a problem to be solved in the present application includes: how to detect a transmission failure when data transmission is performed in the RRC inactive state.

In one embodiment, a problem to be solved in the present application includes: how to reduce power consumption.

The present application provides a method in a first node for wireless communications, comprising:
receiving a first message in RRC inactive state, the first message comprising a first identifier, the first identifier being associated to the first node; and
transmitting a second message as a response to the first message being received, the second message comprising an RRC connection resumption request message; and along with the second message, setting a first field in the second message and determining whether each radio bearer in a first radio bearer set is to be resumed according to at least whether the first message indicates that the first node performs data transmission in the RRC inactive state, the first field being used to indicate a cause of an RRC connection resumption request;
herein, the action of setting a first field in the second message and determining whether each radio bearer in a first radio bearer set is to be resumed according to at least whether the first message indicates that the first node performs data transmission in the RRC inactive state comprises: if the first message does not indicate that the first node performs data transmission in the RRC inactive state, setting the first field in the second message to a first value, and, not resuming each radio bearer in the first radio bearer set; if the first message indicates that the first node performs data transmission in the RRC inactive state, setting the field in the second message to a second value, and, resuming each radio bearer in the first radio bearer set; the first radio bearer set comprises at least one of Signalling Radio Bearer(s) 2 (SRB2) or (user) Data Radio Bearer(s) (DRB(s)) or multicast MBS Radio Bearer(s) (MRB(s)); the first value is one value of a first candidate value set, the first candidate value set comprising at least one value; the second value is one value of a second candidate value set, the second candidate value set comprising at least one value.

In one embodiment, characteristics of the above method include that the first identifier is indicated in a paging message, and, the paging message is capable of indicating the first node's performing of data transmission in the RRC inactive state.

In one embodiment, characteristics of the above method include that the first identifier indicates the first node.

In one embodiment, characteristics of the above method include that the first identifier indicates a Temporary Mobile Group Identity (TMGI) associated with the first node.

In one embodiment, characteristics of the above method include that performing data transmission in the RRC inactive state refers to MT-SDT.

In one embodiment, characteristics of the above method include that performing data transmission in the RRC inactive state refers to receiving multicast MBS in the RRC inactive state.

In one embodiment, characteristics of the above method include that the first candidate value set and the second candidate value set are the same.

In one embodiment, characteristics of the above method include that the first candidate value set and the second candidate value set are different.

In one embodiment, characteristics of the above method include that resuming all radio bearers in the first radio bearer set before transmitting the RRC resumption request message.

In one embodiment, characteristics of the above method include that MT-SDT is indicated in the RRC connection resumption request message.

In one embodiment, an advantage of the above method includes: shortening transmission latency.

In one embodiment, an advantage of the above method includes: reducing power consumption.

In one embodiment, the benefits of the above method include: reducing signaling overhead.

According to one aspect of the present application, characterized in receiving a third message prior to the first message, the third message indicating the first radio bearer set;
herein, the third message is used to determine to enter or maintain the RRC inactive state.

According to one aspect of the present application, characterized in that if the first message indicates that the first node performs data transmission in the RRC inactive state, a second field is used to indicate a data transmission performed in the RRC inactive state, the second field being associated to the second message; the first candidate value set and the second candidate value set are the same.

In one embodiment, characteristics of the above method include that if the first message indicates that the first node performs data transmission in the RRC inactive state, the first field is not used to indicate MT-SDT while the second field is used to indicate MT-SDT.

According to one aspect of the present application, characterized in that if the first message indicates that the first node performs data transmission in the RRC inactive state, the first field in the second message being set to the second value is used to indicate performing of data transmission in the RRC inactive state; the first candidate value set and the second candidate value set are different.

In one embodiment, characteristics of the above method include that if the first message indicates that the first node performs data transmission in the RRC inactive state, the first field is used to indicate MT-SDT.

According to one aspect of the present application, characterized in that if the first message indicates that the first node performs data transmission in the RRC inactive state, whether or not the second candidate value set and the first candidate value set are the same is related to at least one of whether or not a PUSCH resource carrying at least the second message is indicated by the third message or whether or not a random access preamble associated with the second message is associated to an SDT.

In one embodiment, a problem to be solved in the present application includes that if a RA-SDT and a CG-SDT are used as uplink response to the MT-SDT, a random access preamble of the RA-SDT or a CG resource of the CG-SDT are able to indicate that an RRC connection resume procedure is a SDT procedure, the existing cause of resumption is able to indicate that the RRC connection resume procedure is triggered by downlink data. The base station is able to know that the UE resumes radio bearers for MT-SDT. If a non-SDT RRC connection resume procedure is used as an uplink response, the existing reason of resumption is able to indicate that the RRC connection resume procedure is triggered by downlink data, but there is no other information to indicate that the RRC connection resume procedure is a SDT procedure, and the base station is not able to know whether the UE resumes a radio bearer for MT-SDT.

In one embodiment, characteristics of the above method include that if the first message indicates that the first node performs data transmission in the RRC inactive state and a PUSCH resource carrying the second message is indicated by the third message or a random access preamble associated with the second message is associated to a SDT, the second candidate value set is the same as the first candidate value set.

In one embodiment, characteristics of the above method include that if the first message indicates that the first node performs data transmission in the RRC inactive state and a PUSCH resource carrying the second message is not indicated by the third message and a random access preamble associated with the second message is not associated to a SDT, the second candidate value set is different from the first candidate value set.

In one embodiment, characteristics of the above method include that if the first message indicates that the first node performs data transmission in the RRC inactive state and a PUSCH resource carrying the second message is indicated by the third message or a random access preamble associated with the second message is associated to a SDT, the first field is not used to indicate a MT-SDT.

In one embodiment, characteristics of the above method include that if the first message indicates that the first node performs data transmission in the RRC inactive state and a PUSCH resource carrying the second message is not indicated by the third message and a random access preamble associated with the second message is not associated to a SDT, the first field is used to indicate a MT-SDT.

In one embodiment, an advantage of the above method includes: indicating as much information as possible.

In one embodiment, an advantage of the above method includes: increasing the access probability.

In one embodiment, an advantage of the above method includes: reducing standardization impact by not requiring enhancement of the first field if a non-SDT RRC connection resumption procedure is not supported as an uplink response to a paging message for an MT-SDT.

According to one aspect of the present application, characterized in comprising:
in case that the first message indicates that the first node performs data transmission in the RRC inactive state, monitoring a fourth message during the time while a first timer is running as a response to the second message being transmitted; in case of reception of a fourth message, stopping the first timer; and entering RRC idle state in case of expiration of the first timer;
herein, the fourth message is not associated to any radio bearer in the first radio bearer set.

According to one aspect of the present application, characterized in comprising:
along with the second message, starting the first timer.

According to one aspect of the present application, characterized in comprising:
receiving a first data block after the second message is transmitted; and restarting a first timer as a response to the first data block being received;
herein, the first data block is associated to one radio bearer in the first radio bearer set.

According to one aspect of the present application, characterized in comprising:
receiving a first data block after the second message is transmitted; and starting or restarting a second timer as a response to the first data block being received;
herein, the first data block is associated to one radio bearer in the first radio bearer set.

According to one aspect of the present application, characterized in that the first message indicates the first radio bearer set, or, alternatively, the target field is used to determine the first radio bearer set, or, alternatively, the third message indicates the first radio bearer set, or, alternatively, the first identifier is used to determine the first radio bearer set.

The present application provides a method in a second node for wireless communications, comprising:
transmitting a first message, the first message comprising a first identifier, the first identifier being associated to a receiver of the first message; and
receiving a second message as a response to the first message being transmitted, the second message comprising an RRC connection resumption request message;
herein, the receiver of the first message receives the first message in an RRC inactive state; along with the second message, at least whether the first message indicates that the receiver of the first message performs data transmission in the RRC inactive state is used by the receiver of the first message to set a first field in the second message and determine whether each radio bearer in a first radio bearer set is to be resumed, the first field being used to indicate a cause of an RRC connection resumption request; the phrase at least whether the first message indicates that the receiver of the first message performs data transmission in the RRC inactive state is used by the receiver of the first message to set a first field in the second message and determine whether each radio bearer in a first radio bearer set is to be resumed comprises: the first message not indicating that the receiver of the first message performs data transmission in the RRC inactive state being used to determine to set the first field in the second message to a first value, and, not resuming each radio bearer in the first radio bearer set; the first message indicating that the receiver of the first message performs data transmission in the RRC inactive state being used to determine to set the first field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

According to one aspect of the present application, characterized in that a third message is transmitted prior to the first message, the third message indicating the first radio bearer set; the third message is used to determine to enter or maintain the RRC inactive state.

According to one aspect of the present application, characterized in that if the first message indicates that the receiver of the first message performs data transmission in the RRC inactive state, a second field is used to indicate a data transmission performed in the RRC inactive state, the second field being associated to the second message; the first candidate value set and the second candidate value set are the same.

According to one aspect of the present application, characterized in that if the first message indicates that the receiver of the first message performs data transmission in the RRC inactive state, the first field in the second message being set to the second value is used to indicate performing of data transmission in the RRC inactive state; the first candidate value set and the second candidate value set are different.

According to one aspect of the present application, characterized in that if the first message indicates that the receiver of the first message performs data transmission in the RRC inactive state, whether or not the second candidate value set and the first candidate value set are the same is related to at least one of whether or not a PUSCH resource carrying at least the second message is indicated by the third message or whether or not a random access preamble associated with the second message is associated to an SDT.

According to one aspect of the present application, characterized in comprising:
in case that the first message indicates that a receiver of the first message performs data transmission in the RRC inactive state, determining whether a fourth message is to be transmitted, as a response to the second message being received;
herein, the fourth message is monitored by a receiver of the first message while the first timer is running; the first timer is stopped if the fourth message is received by the receiver of the first message; if the first timer expires, the receiver of the first message enters the RRC idle state; and the fourth message is not associated to any radio bearer in the first radio bearer set.

According to one aspect of the present application, characterized in that along with the second message, the first timer is started by the receiver of the first message.

According to one aspect of the present application, characterized in comprising:
transmitting a first data block after the second message is received;
herein, as a response to the first data block being received by a receiver of the first message, a second timer is started or restarted by the receiver of the first message; the first data block is associated to one radio bearer in the first radio bearer set.

The present application provides a first node for wireless communications, comprising:
a first receiver, receiving a first message in RRC inactive state, the first message comprising a first identifier, the first identifier being associated to the first node; and
a first transmitter, transmitting a second message as a response to the first message being received, the second message comprising an RRC connection resumption request message; and along with the second message, setting a first field in the second message and determining whether each radio bearer in a first radio bearer set is to be resumed according to at least whether the first message indicates that the first node performs data transmission in the RRC inactive state, the first field being used to indicate a cause of an RRC connection resumption request;
herein, the action of setting a first field in the second message and determining whether each radio bearer in a first radio bearer set is to be resumed according to at least whether the first message indicates that the first node performs data transmission in the RRC inactive state comprises: if the first message does not indicate that the first node performs data transmission in the RRC inactive state, setting the first field in the second message to a first value, and, not resuming each radio bearer in the first radio bearer set; if the first message indicates that the first node performs data transmission in the RRC inactive state, setting the field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

The present application provides a second node for wireless communications, comprising:
a second transmitter, transmitting a first message, the first message comprising a first identifier, the first identifier being associated to a receiver of the first message; and
a second receiver, receiving a second message as a response to the first message being transmitted, the second message comprising an RRC connection resumption request message;
herein, the receiver of the first message receives the first message in an RRC inactive state; along with the second message, at least whether the first message indicates that the receiver of the first message performs data transmission in the RRC inactive state is used by the receiver of the first message to set a first field in the second message and determine whether each radio bearer in a first radio bearer set is to be resumed, the first field being used to indicate a cause of an RRC connection resumption request; the phrase at least whether the first message indicates that the receiver of the first message performs data transmission in the RRC inactive state is used by the receiver of the first message to set a first field in the second message and determine whether each radio bearer in a first radio bearer set is to be resumed comprises: the first message not indicating that the receiver of the first message performs data transmission in the RRC inactive state being used to determine to set the first field in the second message to a first value, and, not resuming each radio bearer in the first radio bearer set; the first message indicating that the receiver of the first message performs data transmission in the RRC inactive state being used to determine to set the first field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

In one embodiment, compared with the prior art, the present application is advantageous in the following aspects:
- Reducing transmission delay;
- Reducing power consumption;
- Reducing signaling overhead;
- Indicating as much information as possible;
- Increasing the probability of access;
- Reducing the impact of standardization.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of transmission of a first message and a second message according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5 illustrates a flowchart of radio signal transmission according to one embodiment of the present application.
FIG. 6 illustrates a schematic diagram of a second field in a second message being used to indicate that data transmission is performed in RRC inactive state according to one embodiment of the present application.
FIG. 7 illustrates a schematic diagram of a first field in a second message being set to a second value being used to indicate that data transmission is performed in RRC inactive state according to one embodiment of the present application.
FIG. 8 illustrates a schematic diagram showing whether a second candidate value set and a first candidate value set are the same being related to at least one of whether a PUSCH resource carrying at least a second message is indicated by a third message or whether a random access preamble associated with a second message is associated to an SDT, according to another embodiment of the present application.
FIG. 9 illustrates a flowchart of radio signal transmission according to another embodiment of the present application.
FIG. 10 illustrates a structure block diagram of a processing device used in a first node according to one embodiment of the present application.
FIG. 11 illustrates a structure block diagram of a processing device used in a second node according to one embodiment of the present application.
FIG. 12 illustrates a flowchart of radio signal transmission according to a third embodiment of the present application.
FIG. 13 illustrates a flowchart of radio signal transmission according to a fourth embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

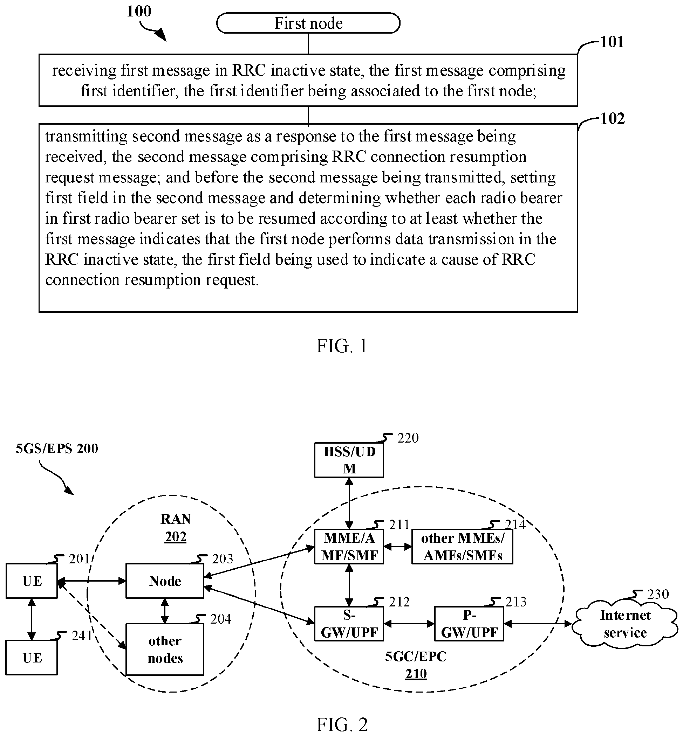

Embodiment 1 illustrates a flowchart of transmission of a first message and a second message according to one embodiment of the present application, as shown in FIG. 1. In FIG. 1, each step represents a step, it should be particularly noted that the sequence order of each box herein does not imply a chronological order of steps marked respectively by these boxes.

In Embodiment 1, the first node in the present application receives a first message in RRC inactive state in step 101, the first message comprising a first identifier, the first identifier being associated to the first node; and transmits a second message as a response to the first message being received in step 102, the second message comprising an RRC connection resumption request message; and along with the second message, sets a first field in the second message and determining whether each radio bearer in a first radio bearer set is to be resumed according to at least whether the first message indicates that the first node performs data transmission in the RRC inactive state, the first field being used to indicate a cause of an RRC connection resumption request; herein, the action of setting a first field in the second message and determining whether each radio bearer in a first radio bearer set is to be resumed according to at least whether the first message indicates that the first node performs data transmission in the RRC inactive state comprises: if the first message does not indicate that the first node performs data transmission in the RRC inactive state, setting the first field in the second message to a first value, and, not resuming each radio bearer in the first radio bearer set; if the first message indicates that the first node performs data transmission in the RRC inactive state, setting the field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

In one embodiment, the RRC inactive state is RRC_INACTIVE state.

In one embodiment, the RRC inactive state is not RRC_IDLE state.

In one embodiment, the first message is used for paging.

In one embodiment, the first message comprises an RRC message.

In one embodiment, the first message is an RRC message.

In one embodiment, the first message comprises at least one RRC Information Element (IE).

In one embodiment, the first message comprises at least one RRC Field.

In one embodiment, the first message is a Paging message.

In one embodiment, the first message comprises an RRC field that includes Paging or Group or List in its name.

In one embodiment, the first message comprises an RRC field that includes Paging or Record or List in its name.

In one embodiment, the first message comprises a PagingRecordList.

In one embodiment, the first message comprises a PagingGroupList-r17.

In one embodiment, one field in the first message indicates the first identifier.

In one embodiment, one field in the first message is set to the first identifier.

In one subembodiment, the one field in the first message is a PagingRecord field.

In one subembodiment, the one field in the first message is a ue-Identity field.

In one subembodiment, the one field in the first message is an I-RNTI-Value field.

In one subembodiment, the one field in the first message is a PagingUE-Identity field.

In one subembodiment, the one field in the first message is a fullI-RNTI field.

In one subembodiment, the one field in the first message is a TMGI field.

In one embodiment, the phrase the first identifier being associated to the first node means: the first identifier indicating the first node.

In one subembodiment, the first identifier is a non-negative integer.

In one subembodiment, the first identifier is a bit string.

In one subembodiment, the first identifier is a fullI-RNTI, the fullI-RNTI being set to an I-RNTI-Value, the I-RNTI-Value being a bit string (BIT STRING).

In one subembodiment, the length of the bit string is a positive integer number of bit(s).

In one subembodiment, the length of the bit string is 48 bits.

In one subembodiment, the first identifier is an I-RNTI-Value.

In one subembodiment, the I-RNTI-Value field is set to the first identifier.

In one subembodiment, the first identifier matches a fullI-RNTI of the first node.

In one subembodiment, the first identifier is equal to the fullI-RNTI of the first node.

In one subembodiment, the first message comprises a PagingRecordList field, the PagingRecordList comprises at least one PagingRecord field, and one PagingRecord field of the at least one PagingRecord field comprises a ue-Identity field, the ue-Identity field comprising a PagingUE-Identity field, the PagingUE-Identity field comprising a fullI-RNTI field, the fullI-RNTI field comprising an I-RNTI-Value field, the I-RNTI-Value field indicating the first identifier.

In one embodiment, the phrase the first identifier being associated to the first node means: the first identifier being a Temporary Mobile Group Identity (TMGI) and that the first node has joined in an MBS session indicated by the TMGI.

In one subembodiment, a TMGI is used to indicate an MBS session associated with a multicast MRB.

In one subembodiment, the first message comprises a PagingGroupList-r17 field, the PagingGroupList-r17 field comprises at least one TMGI field, and one of the at least one TMGI field indicates the first identifier.

In one subembodiment, the one of the at least one TMGI field is set to the first identifier.

In one subembodiment, the at least one TMGI field includes a PLMN index (plmn-Id-r17) and a service index (serviceId-r17).

In one embodiment, if the first identifier indicates the first node, the first radio bearer set includes at least one of SRB2 or DRB(s), and, the first radio bearer set does not include a multicast MRB.

In one embodiment, if the first identifier indicates a TMGI, the first radio bearer set includes a multicast MRB, and, the first radio bearer set does not include any one of SRB2 or DRB(s).

In one embodiment, if the first identifier indicates a TMGI, the first radio bearer set includes at least a multicast MRB, and, the first radio bearer set does not include DRBs.

In one embodiment, the phrase as a response to the first message being received comprises: after the first message is received.

In one embodiment, the first message triggers the second message.

In one embodiment, the second message is an RRC message.

In one embodiment, the second message comprises at least an RRC message.

In one embodiment, the second message comprises at least one RRC IE.

In one embodiment, the second message comprises at least one RRC field.

In one embodiment, the second message is transmitted via a Common Control Channel (CCCH), and the RRC connection resumption request message is an RRCResumeRequest message.

In one embodiment, the second message is transmitted via a Common Control Channel 1 (CCCH1), and the RRC Connection resumption request message is an RRCResumeRequest1 message.

In one embodiment, the second message is transmitted via Signalling Radio Bearer 0 (SRB0).

In one embodiment, the second message comprises at least the RRC connection resumption request message.

In one embodiment, the second message is the RRC connection resumption request message.

In one embodiment, the action of transmitting the second message comprises: delivering the second message to a lower layer, the lower layer comprising at least one of a Packet Data Convergence Protocol (PDCP) layer or a Radio Link Control (RLC) layer or a Medium Access Control (MAC) layer or a Physical (PHY) layer.

In one embodiment, the second message corresponds to a first Service data unit (SDU), the first SDU being a CCCH SDU.

In one subembodiment, the first SDU comprises the second message.

In one subembodiment, the first SDU is a corresponding SDU after the second message is handed over to a protocol layer below the RRC layer.

In one subembodiment, a LCID in a MAC subheader corresponding to the first SDU is set to 0; the second message is transmitted via a CCCH.

In one subembodiment, a LCID in a MAC subheader corresponding to the first SDU is set to 0; the second message is transmitted via a CCCH1.

In one embodiment, the phrase along with the second message comprises: relating to the time when the second message is transmitted.

In one embodiment, the phrase along with the second message comprises: once the second message has been transmitted.

In one embodiment, the phrase along with the second message comprises: when the second message is transmitted.

In one embodiment, the phrase along with the second message comprises: when the second message is transmitted at the MAC layer.

In one embodiment, the phrase along with the second message comprises: when the first SDU is transmitted.

In one embodiment, the phrase along with the second message comprises: when a MAC PDU including the first SDU is transmitted.

In one embodiment, the phrase along with the second message comprises: at least before an RRC response for the second message is received.

In one embodiment, the phrase along with the second message comprises: after the second message has been transmitted, and, before an RRC response for the second message is received.

In one embodiment, the phrase along with the second message comprises: before the second message is transmitted.

In one embodiment, the phrase along with the second message comprises: before the second message is handed over to a protocol layer below the RRC layer.

In one embodiment, the phrase along with the second message comprises: at least after the first message has been received.

In one embodiment, the phrase along with the second message comprises: after the first message has been received, and, before the second message is transmitted.

In one embodiment, the action of setting a first field in the second message and determining whether each radio bearer in a first radio bearer set is to be resumed according to at least whether the first message indicates that the first node performs data transmission in the RRC inactive state comprises: setting the first field in the second message according to at least whether the first message indicates that the first node performs data transmission in the RRC inactive state, and, determining whether each radio bearer in the first radio bearer set is to be resumed according to at least whether the first message indicates that the first node performs data transmission in the RRC inactive state.

In one embodiment, along with the second message, whether each radio bearer in the first radio bearer set is to be resumed is related to at least whether the first message indicates that the first node performs data transmission in the RRC inactive state.

In one embodiment, along with the second message, the value of the first field in the second message is related to at least whether the first message indicates that the first node performs data transmission in the RRC inactive state.

In one embodiment, the action of setting a first field in the second message comprises: setting a value of the first field in the second message.

In one embodiment, a target field in the first message is used to determine whether the first message indicates that the first node performs data transmission in the RRC inactive state.

In one embodiment, whether the first message comprises a target field is used to determine whether the first message indicates that the first node performs data transmission in the RRC inactive state.

In one subembodiment, if the first message comprises the target field, the first message indicates that the first node performs data transmission in the RRC inactive state; if the first message does not comprise the target field, the first message does not indicate that the first node performs data transmission in the RRC inactive state.

In one subembodiment, if the target field is present in the first message, the first message indicates that the first node performs data transmission in the RRC inactive state; if the target field is not present in the first message, the first message does not indicate that the first node performs data transmission in the RRC inactive state.

In one embodiment, the first message comprises a target field, and whether the target field in the first message is set to a target value is used to determine whether the first message indicates that the first node performs data transmission in the RRC inactive state.

In one subembodiment, if the target field in the first message is set to the target value, the first message indicates that the first node performs data transmission in the RRC inactive state; if the target field in the first message is set to any value other than the target value, the first message does not indicate that the first node performs data transmission in the RRC inactive state.

In one subembodiment, the target value is true.

In one subembodiment, the target value is a candidate value in a candidate value set, any value in the candidate value set being used to indicate reception of data in the RRC inactive state.

In one subembodiment, the candidate value set includes only one candidate value.

In one subembodiment, the candidate value set includes at least 2 candidate values.

In one subembodiment, one candidate value in the candidate value set indicates a MT-SDT.

In one subembodiment, one candidate value in the candidate value set indicates reception of a multicast MBS in the RRC inactive state.

In one embodiment, whether the first message indicates the first radio bearer set is used to determine whether the first message indicates that the first node performs data transmission in the RRC inactive state.

In one subembodiment, if the first message indicates the first radio bearer set, the first message indicates that the first node performs data transmission in the RRC inactive state; if the first message does not indicate the first radio bearer set, the first message does not indicate that the first node performs data transmission in the RRC inactive state.

In one subembodiment, if the first message explicitly indicates at least one radio bearer, the first message indicates that the first node performs data transmission in the RRC inactive state; if the first message does not explicitly indicate any radio bearer, the first message does not indicate that the first node performs data transmission in the RRC inactive state.

In one subembodiment, if the first message indicates identifier(s) of at least one radio bearer, the first message indicates that the first node performs data transmission in the RRC inactive state, the first radio bearer set including the at least one radio bearer; if the first message does not indicate the identifier of any radio bearer, the first message does not indicate that the first node performs data transmission in the RRC inactive state.

In one embodiment, performing data transmission in the RRC inactive state means: transmitting data in the RRC inactive state via at least one radio bearer in the first radio bearer set.

In one embodiment, performing data transmission in the RRC inactive state means: transmitting unicast data in the RRC inactive state.

In one subembodiment, if the first identifier in the first message indicates the first node, performing data transmission in the RRC inactive state means: transmitting unicast data in the RRC inactive state.

In one subembodiment, the unicast data comprises user-plane data.

In one subembodiment, the unicast data comprises control-plane signaling.

In one subembodiment, the phrase transmitting unicast data in the RRC inactive state comprises: transmitting data in the RRC inactive state via at least one of SRB2 or at least one DRB.

In one subembodiment, the phrase transmitting unicast data in the RRC inactive state comprises: transmitting data in the RRC inactive state via at least one DRB.

In one subembodiment, the phrase transmitting unicast data in the RRC inactive state comprises: receiving unicast data in the RRC inactive state.

In one subembodiment, the phrase transmitting unicast data in the RRC inactive state comprises: a MT-SDT.

In one subembodiment, the first radio bearer set comprises all DRBs of the first node.

In one subembodiment, the first radio bearer set comprises SRB2 and all DRBs of the first node.

In one subembodiment, the first radio bearer set consists of all DRBs of the first node.

In one subembodiment, the first radio bearer set consists of SRB2 and all DRBs of the first node.

In one subembodiment, the first radio bearer set comprises at least one radio bearer of all the DRBs of the first node.

In one subembodiment, the first radio bearer set comprises at least one radio bearer of SRB2 and all the DRBs of the first node.

In one embodiment, performing data transmission in the RRC inactive state means: receiving a multicast MBS in the RRC inactive state.

In one subembodiment, if the first identifier is a TMGI and the first node has joined in an MBS session indicated by the TMGI, performing data transmission in the RRC inactive state means: receiving a multicast MBS in the RRC inactive state.

In one subembodiment, the phrase receiving a multicast MBS in the RRC inactive state comprises: receiving data in the RRC inactive state via at least one of SRB2 or at least one multicast MBS.

In one subembodiment, the phrase receiving a multicast MBS in the RRC inactive state comprises: receiving data in the RRC inactive state via at least one multicast MBS.

In one subembodiment, the first radio bearer set comprises all MRBs of the first node.

In one subembodiment, the first radio bearer set comprises SRB2 and all MRBs of the first node.

In one subembodiment, the first radio bearer set consists of all MRBs of the first node.

In one subembodiment, the first radio bearer set consists of SRB2 and all MRBs of the first node.

In one subembodiment, the first radio bearer set comprises at least one radio bearer of all the MRBs of the first node.

In one subembodiment, the first radio bearer set comprises at least one radio bearer of SRB2 and all the MRBs of the first node.

In one embodiment, the first field is a field in the second message.

In one embodiment, the first field is a resumeCause field.

In one embodiment, the first field includes resume and Cause in its name.

In one embodiment, resume SRB1 before the second message is delivered to a lower layer.

In one embodiment, re-establish a PDCP entity of SRB1 before the second message is delivered to a lower layer.

In one embodiment, any value in the first candidate value set is used to determine that the first node enters RRC connected (RRC_CONNECTED) state for data transmission.

In one embodiment, the first field in the second message being set to any value in the first candidate value set is used to indicate that the second message is triggered by downlink data.

In one embodiment, the first field in the second message being set to any value in the first candidate value set is used to indicate that the second message is triggered by a paging message.

In one embodiment, one value in the first candidate value set is mps-PriorityAccess.

In one embodiment, one value in the first candidate value set is mcs-PriorityAccess.

In one embodiment, one value in the first candidate value set is highPriorityAccess.

In one embodiment, one value in the first candidate value set is mt-Access.

In one embodiment, the first candidate value set includes at least mps-PriorityAccess, mcs-Priority Access, highPriorityAccess, or mt-Access.

In one embodiment, the first candidate value set is the second candidate value set.

In one subembodiment, any value in the first candidate value set is the same as one value in the second candidate value set, and, any value in the second candidate value set is the same as one value in the first candidate value set.

In one embodiment, the first candidate value set is different from the second candidate value set.

In one subembodiment, the second candidate value set includes only one candidate value.

In one subembodiment, the second candidate value set includes at least 2 candidate values.

In one subembodiment, any value in the first candidate value set is different from any value in the second candidate value set.

In one subembodiment, any value in the second candidate value set is not any one of Emergency or highPriorityAccess or mt-Access or mo-Signalling or mo-Data or mo-VoiceCall or mo-VideoCall or mo-SMS or ma-Update or mps-Priority Access or mcs-Priority Access.

In one subembodiment, any value in the second candidate value set is used to indicate that the second message is triggered by receiving downlink data in RRC inactive state.

In one subembodiment, any value in the second candidate value set is used to indicate that the second message is triggered by performing data transmission in the RRC inactive state.

In one subembodiment, any value in the second candidate value set is used to indicate that the second message is triggered by the target field in the first message.

In one subembodiment, any value in the second candidate value set is used to determine that the first node remains in the RRC inactive state for performing data transmission.

In one subembodiment, any value in the second candidate value set indicates performing of data transmission in the RRC inactive state.

In one subembodiment, one value in the second candidate value set indicates transmission of unicast data in the RRC inactive state.

In one subembodiment, one value in the second candidate value set is mt-SDT.

In one subembodiment, the name of one value in the second candidate value set includes at least one of mt or SDT or -r18.

In one subembodiment, one value in the second candidate value set indicates reception of a multicast MBS in the RRC inactive state.

In one subembodiment, one value in the second candidate value set is at least one of mt or MBS or I or Inactive.

In one embodiment, if the first message does not indicate that the first node performs data transmission in the RRC inactive state, the first value is determined based on an Access Identity for the first node configured by a higher layer.

In one embodiment, the action that the first value is determined based on an access identifier configured for the first node by a higher layer comprises that the first field in the second message is set to the first value based on an Access Identity for the first node being configured by a higher layer.

In one embodiment, the action that the first value is determined based on an access identifier configured for the first node by a higher layer comprises that if the access identifier configured for the first node by the higher layer is equal to 1, the first value is mps-PriorityAccess; if the access identifier configured for the first node by the higher layer is equal to 2, the first value is mcs- Priority Access; if the access identifier configured for the first node by the higher layer is no less than 11 and no greater than 15, the first value is highPriorityAccess; if the first node is not configured with an access identifier by the higher layer, the first value is mt-Access.

In one embodiment, if the first message indicates that the first node performs data transmission in the RRC inactive state, the second value is not determined based on an Access Identity for the first node configured by a higher layer.

In one embodiment, if the first message indicates that the first node performs data transmission in the RRC inactive state, an Access Identity for the first node configured by a higher layer is not used to determine the second value.

In one embodiment, if the first message indicates that the first node performs data transmission in the RRC inactive state, whether an Access Identity is configured for the first node by a higher layer is not used to determine the second value.

In one embodiment, if the first message indicates that the first node performs data transmission in the RRC inactive state, the second value is independent of an Access Identity for the first node configured by a higher layer.

In one embodiment, if the first message indicates that the first node performs data transmission in the RRC inactive state, the second value is determined based on an Access Identity for the first node configured by a higher layer; the second value is the first value; the second candidate value set is the first candidate value set.

In one embodiment, the first radio bearer set does not include SRB0.

In one embodiment, the first radio bearer set does not include Signalling Radio Bearer 1 (SRB1).

In one embodiment, the first radio bearer set does not include Signalling Radio Bearer 3 (SRB3).

In one embodiment, the first radio bearer set does not include SRB0 and the first radio bearer set does not include SRB1.

In one embodiment, the first radio bearer set does not include SRB0 and the first radio bearer set does not include SRB1 and the first radio bearer set does not include SRB3.

In one embodiment, each radio bearer in the first radio bearer set is not SRB0 and each radio bearer in the first radio bearer set is not SRB1.

In one embodiment, each radio bearer in the first radio bearer set is not SRB0 and each radio bearer in the first radio bearer set is not SRB1 and each radio bearer in the first radio bearer set is not SRB3.

In one embodiment, the first radio bearer set does not include both of a multicast MRB and a DRB.

In one embodiment, the first radio bearer set can include both a multicast MRB and a DRB.

In one embodiment, the first radio bearer set includes at least one Radio Bearer (RB).

In one embodiment, the first radio bearer set includes at least one Radio Bearer (RB), and one of the at least one RB is at least one of a MRB or a DRB or a SRB2.

In one embodiment, the first radio bearer set includes only SRB2.

In one embodiment, the first radio bearer set includes only at least one DRB.

In one embodiment, the first radio bearer set includes only at least one multicast MRB.

In one embodiment, the first radio bearer set includes only SRB2 and at least one DRB.

In one embodiment, the first radio bearer set includes only SRB2 and at least one multicast MRB.

In one embodiment, the first radio bearer set includes all DRBs of the first node.

In one embodiment, the first radio bearer set includes a subset of all DRBs of the first node.

In one embodiment, the first radio bearer set does not include at least one DRB of all DRBs of the first node.

In one embodiment, the SBR2 is defined with reference to 3GPP TS 38.331.

In one embodiment, the DRB is defined with reference to 3GPP TS 38.331.

In one embodiment, the DRB is a radio bearer identified by a DRB-Identity.

In one embodiment, the multicast MRB is a radio bearer identified by an MRB-Identity.

In one embodiment, the multicast MRB is a radio bearer identified by an MRB-Identity-r17.

In one embodiment, the multicast MRB is a radio bearer identified by an MRB-Identity-r18.

In one embodiment, the multicast MRB is not a broadcast MRB.

In one embodiment, the multicast MRB is defined with reference to 3GPP TS 38.331.

### Embodiment 2

Embodiment 2 illustrates a schematic diagram of a network architecture according to one embodiment of the present application, as shown in FIG. 2. FIG. 2 illustrates a network architecture 200 of 5G New Radio (NR)/Long-Term Evolution (LTE)/Long-Term Evolution Advanced (LTE-A) systems. The 5G NR/LTE/LTE-A network architecture 200 may be called a 5G System/ Evolved Packet System (5GS/EPS) 200 or other suitable terminology. The 5GS/EPS 200 may comprise UE(s) 201, a RAN 202, a 5G Core Network/Evolved Packet Core (5GC/EPC) 210, a Home Subscriber Server/ Unified Data Management (HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The RAN comprises a node 203 and another node 204. The node 203 provides UE 201 oriented user plane and control plane terminations. The node 203 can be connected to other node 204 via an Xn interface (like backhaul)/X2 interface. The node 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The node 203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The node 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

Embodiment 2 illustrates a schematic diagram of a network architecture according to one embodiment of the present application, as shown in FIG. 2. FIG. 2 illustrates a network architecture 200 of 5G New Radio (NR)/Long-Term Evolution (LTE)/Long-Term Evolution Advanced (LTE-A) systems. The 5G NR/LTE/LTE-A network architecture 200 may be called a 5G System/ Evolved Packet System (5GS/EPS) 200 or other suitable terminology. The 5GS/EPS 200 may comprise UE(s) 201, a RAN 202, a 5G Core Network/Evolved Packet Core (5GC/EPC) 210, a Home Subscriber Server/ Unified Data Management (HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The RAN comprises a node 203 and another node 204. The node 203 provides UE 201 oriented user plane and control plane terminations. The node 203 can be connected to other node 204 via an Xn interface (like backhaul)/X2 interface. The node 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The node 203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The node 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 201 is a UE.

In one embodiment, the node 203 corresponds to the second node in the present application.

In one embodiment, the node 203 is a BaseStation (BS).

In one embodiment, the node 203 is a Base Transceiver Station (BTS).

In one embodiment, the node 203 is a NodeB (NB).

In one embodiment, the node 203 is a gNB.

In one embodiment, the node 203 is an eNB.

In one embodiment, the node 203 is an ng-eNB.

In one embodiment, the node 203 is an en-gNB.

In one embodiment, the node 203 is a Centralized Unit (CU).

In one embodiment, the node 203 is a Distributed Unit (DU).

In one embodiment, the node 203 is a UE.

In one embodiment, the node 203 is a relay.

In one embodiment, the node 203 is a Gateway.

In one embodiment, the node 204 corresponds to the third node in the present application.

In one embodiment, the node 204 is a BS.

In one embodiment, the node 204 is a BTS.

In one embodiment, the node 204 is a NB.

In one embodiment, the node 204 is a gNB.

In one embodiment, the node 204 is an eNB.

In one embodiment, the node 204 is an ng-eNB.

In one embodiment, the node 204 is an en-gNB.

In one embodiment, the node 204 is a UE.

In one embodiment, the node 204 is a relay.

In one embodiment, the node 204 is a Gateway.

In one embodiment, the node 204 is a CU.

In one embodiment, the node 204 is a DU.

In one embodiment, the node 203 and the node 204 are connected via an ideal backhaul.

In one embodiment, the node 203 and the node 204 are connected via a non-ideal backhaul.

In one embodiment, the node 203 and the node 204 simultaneously provide wireless resources to the UE201.

In one embodiment, the node 203 and the node 204 do not simultaneously provide wireless resources to the UE201.

In one embodiment, the node 203 and the node 204 are the same node.

In one embodiment, the node 203 and the node 204 are two different nodes.

In one embodiment, the UE supports transmissions in Non-Terrestrial Network (NTN).

In one embodiment, the UE supports transmissions in Terrestrial Network (TN).

In one embodiment, the UE supports transmissions in large-delay-difference networks.

In one embodiment, the UE supports Dual Connection (DC) transmissions.

In one embodiment, the UE comprises an aircraft.

In one embodiment, the UE comprises a vehicle-mounted terminal.

In one embodiment, the UE comprises a vessel.

In one embodiment, the UE comprises an Internet-of- Things (IoT) terminal.

In one embodiment, the UE comprises an Industrial IoT (IIoT) terminal.

In one embodiment, the UE comprises a piece of equipment supporting transmissions with low delay and high reliability.

In one embodiment, the UE comprises test equipment.

In one embodiment, the UE comprises a signaling test instrument.

In one embodiment, the base station supports transmissions in NTN.

In one embodiment, the base station supports transmissions in large-delay-difference networks.

In one embodiment, the base station supports transmissions in TN.

In one embodiment, the base station comprises a MacroCellular base station.

In one embodiment, the base station comprises a Micro Cell base station.

In one embodiment, the base station comprises a Pico Cell base station.

In one embodiment, the base station comprises a Femtocell.

In one embodiment, the base station comprises a base station device supporting large time-delay difference.

In one embodiment, the base station comprises a flight platform.

In one embodiment, the base station comprises satellite equipment.

In one embodiment, the base station comprises a Transmitter Receiver Point (TRP).

In one embodiment, the base station comprises a Centralized Unit (CU).

In one embodiment, the base station comprises a Distributed Unit (DU).

In one embodiment, the base station comprises test equipment.

In one embodiment, the base station comprises a signaling test instrument.

In one embodiment, the base station comprises an Integrated Access and Backhaul-node (IAB-node).

In one embodiment, the base station comprises an IAB-donor.

In one embodiment, the base station comprises an IAB-donor-CU.

In one embodiment, the base station comprises an IAB-donor-DU.

In one embodiment, the base station comprises an IAB-DU.

In one embodiment, the base station comprises an IAB-MT.

In one embodiment, the relay comprises a relay.

In one embodiment, the relay comprises a L3 relay.

In one embodiment, the relay comprises a L2 relay.

In one embodiment, the relay comprises a Router.

In one embodiment, the relay comprises an Exchanger.

In one embodiment, the relay comprises a UE.

In one embodiment, the relay comprises a base station.

### Embodiment 3

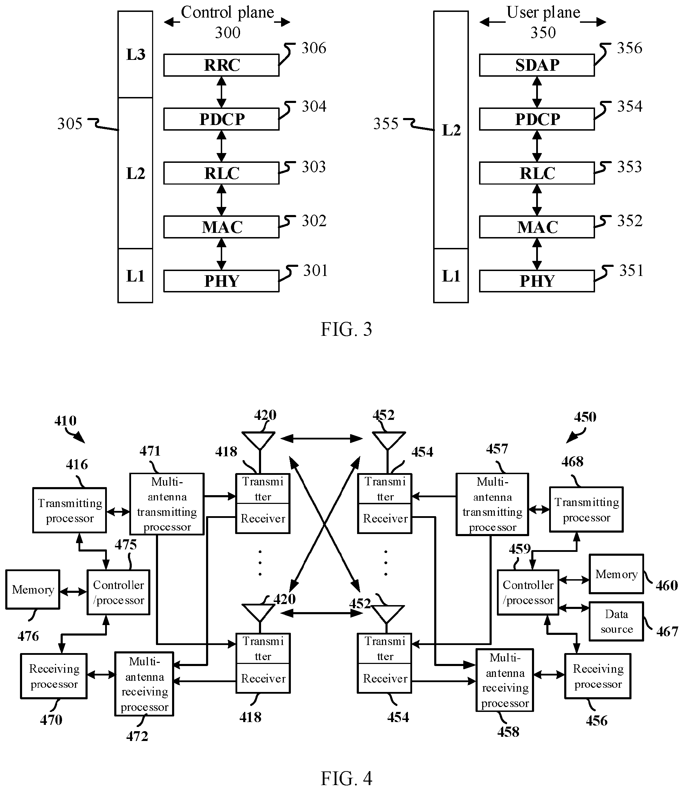

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 is represented by three layers, which are layer1, layer2 and layer3. The layer 1 (L1) is the lowest layer which performs signal processing functions of various PHY layers. The L1 is called PHY 301 in the present application. The layer 2 (L2) 305 is above the PHY 301, and is in charge of the link between the UE and the gNB via the PHY 301. The L2 305 comprises a Medium Access Control (MAC) sublayer 302, a Radio Link Control (RLC) sublayer 303 and a Packet Data Convergence Protocol (PDCP) sublayer 304. The PDCP sublayer 304 provides multiplexing among variable radio bearers and logical channels. The PDCP sublayer 304 provides security by encrypting a packet and provides support for inter-cell handover. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling. The radio protocol architecture in the user plane 350 comprises the L1 layer and the L2 layer. In the user plane 350, the radio protocol architecture used for a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics.

In one embodiment, the radio protocol architecture in FIG. 3 is applicable to the first node in the present application.

In one embodiment, the radio protocol architecture in FIG. 3 is applicable to the second node in the present application.

In one embodiment, the first message in the present application is generated by the RRC306.

In one embodiment, the first message in the present application is generated by the MAC302 or the MAC352.

In one embodiment, the first message in the present application is generated by the PHY301 or the PHY351.

In one embodiment, the second message in the present application is generated by the RRC306.

In one embodiment, the second message in the present application is generated by the MAC302 or the MAC352.

In one embodiment, the second message in the present application is generated by the PHY301 or the PHY351.

In one embodiment, the third message in the present application is generated by the RRC306.

In one embodiment, the third message in the present application is generated by the MAC302 or the MAC352.

In one embodiment, the third message in the present application is generated by the PHY301 or the PHY351.

In one embodiment, the fourth message in the present application is generated by the RRC306.

In one embodiment, the fourth message in the present application is generated by the MAC302 or the MAC352.

In one embodiment, the fourth message in the present application is generated by the PHY301 or the PHY351.

In one embodiment, the first data packet in the present application is generated by the RRC306.

In one embodiment, the first data packet in the present application is generated by the MAC302 or the MAC352.

In one embodiment, the first data packet in the present application is generated by the PHY301 or the PHY351.

### Embodiment 4

Embodiment 4 illustrates a schematic diagram of a first communication device and a second communication device according to the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, a higher layer packet from a core network is provided to the controller/processor 475. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 410 side and the mapping of signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the second communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication node 410 to the first communication node 450, the controller/processor 459 performs header compression, encryption, packet segmentation and reordering, and multiplexing between a logical channel and a transport channel based on radio resource allocation so as to provide the L2 layer functions used for the user plane and the control plane. The controller/processor 459 is also responsible for a retransmission of a lost packet, and a signaling to the second communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device (UE) 450. The higher-layer packet coming from the controller/processor 475 may be provided to the core network.

In one embodiment, the first communication device 450 comprises at least one processor and at least one memory. The at least one memory comprises computer program codes; the at least one memory and the computer program codes are configured to be used in collaboration with the at least one processor. The first communication device 450 at least receives a first message in RRC inactive state, the first message comprising a first identifier, the first identifier being associated to the first node; and transmits a second message as a response to the first message being received, the second message comprising an RRC connection resumption request message; and along with the second message, sets a first field in the second message and determines whether each radio bearer in a first radio bearer set is to be resumed according to at least whether the first message indicates that the first node performs data transmission in the RRC inactive state, the first field being used to indicate a cause of an RRC connection resumption request; herein, the action of setting a first field in the second message and determining whether each radio bearer in a first radio bearer set is to be resumed according to at least whether the first message indicates that the first node performs data transmission in the RRC inactive state comprises: if the first message does not indicate that the first node performs data transmission in the RRC inactive state, setting the first field in the second message to a first value, and, not resuming each radio bearer in the first radio bearer set; if the first message indicates that the first node performs data transmission in the RRC inactive state, setting the field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

In one embodiment, the first communication device 450 comprises a memory that stores a computer readable instruction program. The computer readable instruction program generates actions when executed by at least one processor. The actions include: receiving a first message in RRC inactive state, the first message comprising a first identifier, the first identifier being associated to the first node; and transmitting a second message as a response to the first message being received, the second message comprising an RRC connection resumption request message; and along with the second message, setting a first field in the second message and determining whether each radio bearer in a first radio bearer set is to be resumed according to at least whether the first message indicates that the first node performs data transmission in the RRC inactive state, the first field being used to indicate a cause of an RRC connection resumption request; herein, the action of setting a first field in the second message and determining whether each radio bearer in a first radio bearer set is to be resumed according to at least whether the first message indicates that the first node performs data transmission in the RRC inactive state comprises: if the first message does not indicate that the first node performs data transmission in the RRC inactive state, setting the first field in the second message to a first value, and, not resuming each radio bearer in the first radio bearer set; if the first message indicates that the first node performs data transmission in the RRC inactive state, setting the field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

In one embodiment, the second communication device 410 comprises at least one processor and at least one memory. The at least one memory comprises computer program codes; the at least one memory and the computer program codes are configured to be used in collaboration with the at least one processor. The second communication device 410 at least transmits a first message, the first message comprising a first identifier, the first identifier being associated to a receiver of the first message; and receives a second message as a response to the first message being transmitted, the second message comprising an RRC connection resumption request message; herein, the receiver of the first message receives the first message in an RRC inactive state; along with the second message, at least whether the first message indicates that the receiver of the first message performs data transmission in the RRC inactive state is used by the receiver of the first message to set a first field in the second message and determine whether each radio bearer in a first radio bearer set is to be resumed, the first field being used to indicate a cause of an RRC connection resumption request; the phrase at least whether the first message indicates that the receiver of the first message performs data transmission in the RRC inactive state is used by the receiver of the first message to set a first field in the second message and determine whether each radio bearer in a first radio bearer set is to be resumed comprises: the first message not indicating that the receiver of the first message performs data transmission in the RRC inactive state being used to determine to set the first field in the second message to a first value, and, not resuming each radio bearer in the first radio bearer set; the first message indicating that the receiver of the first message performs data transmission in the RRC inactive state being used to determine to set the first field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

In one embodiment, the second communication device 410 comprises a memory that stores a computer readable instruction program. The computer readable instruction program generates actions when executed by at least one processor. The actions include: transmitting a first message, the first message comprising a first identifier, the first identifier being associated to a receiver of the first message; and receiving a second message as a response to the first message being transmitted, the second message comprising an RRC connection resumption request message; herein, the receiver of the first message receives the first message in an RRC inactive state; along with the second message, at least whether the first message indicates that the receiver of the first message performs data transmission in the RRC inactive state is used by the receiver of the first message to set a first field in the second message and determine whether each radio bearer in a first radio bearer set is to be resumed, the first field being used to indicate a cause of an RRC connection resumption request; the phrase at least whether the first message indicates that the receiver of the first message performs data transmission in the RRC inactive state is used by the receiver of the first message to set a first field in the second message and determine whether each radio bearer in a first radio bearer set is to be resumed comprises: the first message not indicating that the receiver of the first message performs data transmission in the RRC inactive state being used to determine to set the first field in the second message to a first value, and, not resuming each radio bearer in the first radio bearer set; the first message indicating that the receiver of the first message performs data transmission in the RRC inactive state being used to determine to set the first field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

In one embodiment, the antenna 452, the receiver 454, the receiving processor 456, and the controller/processor 459 are used for receiving a first message.

In one embodiment, at least one of the antenna 420, the transmitter 418, the transmitting processor 416 or the controller/processor 475 is used for transmitting a first message.

In one embodiment, the antenna 452, the transmitter 454, the transmitting processor 468 and the controller/processor 459 are used for transmitting a second message.

In one embodiment, at least one of the antenna 420, the receiver 418, the receiving processor 470 or the controller/processor 475 is used for receiving a second message.

In one embodiment, the antenna 452, the receiver 454, the receiving processor 456, and the controller/processor 459 are used for receiving a third message.

In one embodiment, at least one of the antenna 420, the transmitter 418, the transmitting processor 416 or the controller/processor 475 is used for transmitting a third message.

In one embodiment, the antenna 452, the receiver 454, the receiving processor 456, and the controller/processor 459 are used for monitoring or receiving a fourth message.

In one embodiment, at least one of the antenna 420, the transmitter 418, the transmitting processor 416 or the controller/processor 475 is used for transmitting a fourth message.

In one embodiment, the antenna 452, the receiver 454, the receiving processor 456, and the controller/processor 459 are used for receiving a first data block.

In one embodiment, at least one of the antenna 420, the transmitter 418, the transmitting processor 416 or the controller/processor 475 is used for transmitting a first data block.

In one embodiment, the first communication device 450 corresponds to the first node in the present application.

In one embodiment, the second communication device 410 corresponds to the second node in the present application.

In one embodiment, the first communication device 450 is a UE.

In one embodiment, the first communication device 450 is a UE supporting large delay difference.

In one embodiment, the first communication device 450 is a UE supporting NTN.

In one embodiment, the first communication device 450 is an aircraft.

In one embodiment, the first communication device 450 is capable of positioning.

In one embodiment, the first communication device 450 is incapable of positioning.

In one embodiment, the first communication device 450 is a UE supporting TN.

In one embodiment, the second communication device 410 is a base station (gNB/eNB/ng-eNB).

In one embodiment, the second communication device 410 is a base station supporting large delay difference.

In one embodiment, the second communication device 410 is a base station supporting NTN.

In one embodiment, the second communication device 410 is satellite equipment.

In one embodiment, the second communication device 410 is a flight platform.

In one embodiment, the second communication device 410 is a base station supporting TN.

### Embodiment 5

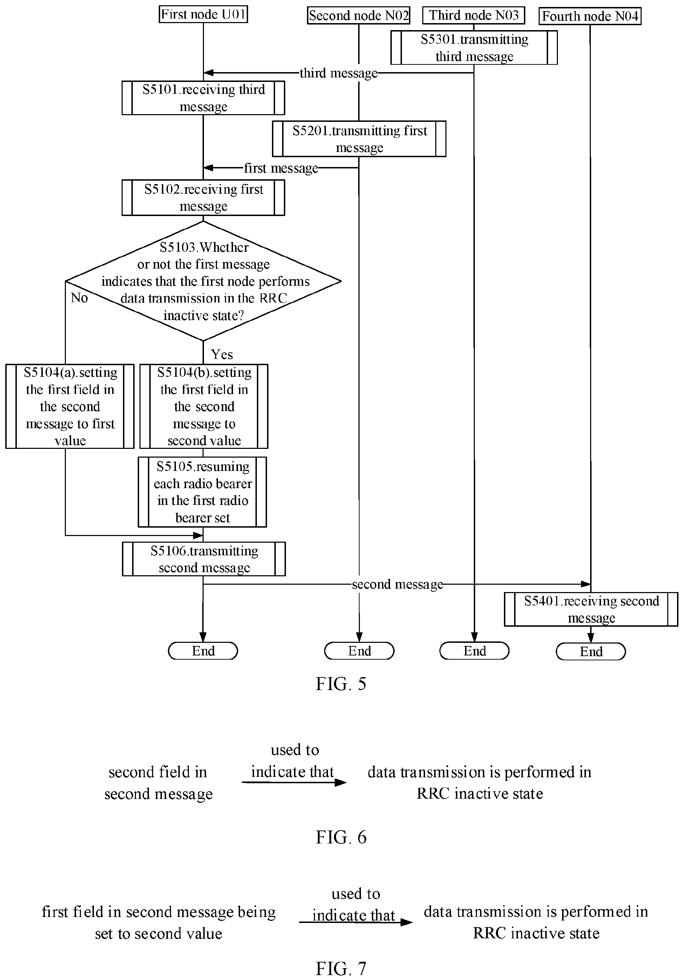

Embodiment 5 illustrates a flowchart of radio signal transmission according to one embodiment of the present application, as shown in FIG. 5. It should be particularly noted that the sequence illustrated herein does not set any limit to the signal transmission order or implementation order in the present application.

A **first node U01,** in step S5101, receives a third message; in step S5102, receives a first message in the RRC inactive state, the first message comprising a first identifier, the first identifier being associated to the first node U01; and, in step S5103, as a response to the first message being received, determines whether or not the first message indicates that the first node U01 performs data transmission in the RRC inactive state, if the first message does not indicate that the first node U01 performs data transmission in the RRC inactive state, performing step S5104(a), if the first message indicates that the first node U01 performs data transmission in the RRC inactive state, performing step S5104(b) and performing step S5105; at step S5104(a), setting the first field in the second message to a first value; in step S5104(b), setting the first field in the second message to a second value; in step S5105, resuming each radio bearer in the first radio bearer set; and in step S5106, as a response to the first message being received, transmitting a second message, the second message comprising an RRC connection resumption request message.

A **second node N02** transmits the first message in step S5201.

A **third node N03** transmits the third message in step S5301.

A **fourth node N04** receives the second message in step S5401.

In Embodiment 5, the first field is used to indicate a cause of an RRC connection resumption request; the third message is used to determine to enter or maintain the RRC inactive state; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

In one embodiment, the first node U01 is a UE.

In one embodiment, the first node U01 is a base station.

In one embodiment, the first node U01 is a relay device.

In one embodiment, the second node N02 is a base station.

In one embodiment, the second node N02 is a UE.

In one embodiment, the second node N02 is a relay device.

In one embodiment, the third node N03 is a base station.

In one embodiment, the third node N03 is a UE.

In one embodiment, the third node N03 is a relay device.

In one embodiment, the fourth node N04 is a base station.

In one embodiment, the fourth node N04 is a UE.

In one embodiment, the fourth node N04 is a relay device.

Typically, the first node U01 is a UE, the second node N02 is a gNB, the third node N03 is a gNB and the fourth node N04 is a gNB.

In one embodiment, the second node N02, the third node N03 and the fourth node N04 are all the same.

In one embodiment, at least two of the second node N02, the third node N03 and the fourth node N04 are different.

In one embodiment, the second node N02 and the third node N03 are the same.

In one embodiment, the second node N02 and the third node N03 are different.

In one embodiment, the second node N02 and the fourth node N04 are the same.

In one embodiment, the second node N02 and the fourth node N04 are different.

In one embodiment, the first message indicates the first radio bearer set, or, alternatively, the target field is used to determine the first radio bearer set, or, alternatively, the third message indicates the first radio bearer set, or, alternatively, the first identifier is used to determine the first radio bearer set.

In one embodiment, the first radio bearer set includes all DRBs with which the first node U01 is configured.

In one embodiment, the first message indicates the first radio bearer set.

In one subembodiment, the radio bearer indicated by the first message is a radio bearer in the first radio bearer set.

In one embodiment, if the first identifier is a TMGI and the first node U01 has joined in an MBS session indicated by the TMGI, the first identifier is used to determine the first radio bearer set.

In one subembodiment, the first identifier being used to determine the first radio bearer set means that the first identifier is used to indicate one radio bearer in the first radio bearer set.

In one subembodiment, the first message comprises at least one TMGI and the first node U01 has joined in an MBS session indicated by each of the at least one TMGI, the first radio bearer set comprising all multicast MRBs associated with the at least one TMGI; the first identifier being one of the at least one TMGI.

In one subembodiment, the first radio bearer set consists of all multicast MRBs associated with the at least one TMGI.

In one subembodiment, a TMGI and a multicast MRB being indicated by the same MRB-ToAddMod is used to determine that the TMGI is associated to the multicast MRB.

In one subembodiment, a TMGI being associated to a multicast MRB means that the multicast MRB is configured with respect to the TMGI.

In one embodiment, the target field is used to determine the first radio bearer set.

In one subembodiment, if the target field in the first message indicates that the first node U01 performs data transmission in the RRC inactive state, the first radio bearer set comprises all DRBs of the first node U01.

In one subembodiment, if the target field in the first message indicates that the first node U01 performs data transmission in the RRC inactive state, the first radio bearer set comprises SRB2 of the first node U01.

In one subembodiment, if the target field in the first message indicates that the first node U01 performs data transmission in the RRC inactive state, the first radio bearer set comprises all multicast MRBs of the first node U01.

In one embodiment, the first radio bearer set is not indicated by the third message.

In one embodiment, the third message does not include an identifier of any radio bearer in the first radio bearer set.

In one embodiment, the third message does not include an identifier of any radio bearer in the first radio bearer set.

In one embodiment, the third message does not include an identifier(s) of at least one radio bearer in the first radio bearer set.

In one embodiment, the third message indicates the first radio bearer set.

In one embodiment, if the target field in the first message indicates that the first node U01 performs data transmission in the RRC inactive state, the third message indicates the first radio bearer set.

In one embodiment, the third message indicates at least one radio bearer of all DRBs of the first node U01, the first radio bearer set consisting of the at least one radio bearer.

In one embodiment, the third message indicates at least one radio bearer of SRB2 and all DRBs of the first node U01, the first radio bearer set consisting of the at least one radio bearer.

In one embodiment, the third message indicates at least one radio bearer of all MRBs of the first node U01, the first radio bearer set consisting of the at least one radio bearer.

In one embodiment, the third message indicates at least one radio bearer of SRB2 and all MRBs of the first node U01, the first radio bearer set consisting of the at least one radio bearer.

In one embodiment, the first node U01 determines the first radio bearer set based on the third message.

In one embodiment, the third message is used to determine the first radio bearer set.

In one embodiment, the third message indicates the first radio bearer set.

In one embodiment, the third message explicitly indicates each radio bearer in the first radio bearer set.

In one embodiment, the third message explicitly indicates one radio bearer in the first radio bearer set.

In one embodiment, the third message implicitly indicates one radio bearer in the first radio bearer set.

In one embodiment, the third message comprises a sdt-Config field, the sdt-Config field indicating the first radio bearer set.

In one embodiment, the third message comprises a sdt-DRB-List, the sdt-DRB-List indicating all DRBs in the first radio bearer set.

In one embodiment, the third message comprises a sdt-SRB2-Indication, the sdt-SRB2-Indication indicating SRB2 in the first radio bearer set.

In one embodiment, the third message includes identifiers of all radio bearers in the first radio bearer set.

In one embodiment, the third message includes an identifier of each radio bearer in the first radio bearer set.

In one embodiment, the first message comprises a first information block, the first information block indicating each radio bearer in the first radio bearer set; the first information block is associated to the first identifier, the first identifier indicating the first node U01.

In one subembodiment, the first message includes a PagingRecord field, the PagingRecord field including the first information block and the first identifier.

In one embodiment, the third message includes a first information block, the first information block indicating each radio bearer in the first radio bearer set.

In one subembodiment, the third message includes a suspendConfig field, the suspendConfig field in the third message including the first information block.

In one embodiment, the first information block comprises at least one RRC field.

In one embodiment, the first information block comprises at least one RRC IE.

In one embodiment, the first information block comprises a sdt-Config.

In one embodiment, the first information block is a sdt-Config.

In one embodiment, the first information block comprises a sdt-DRB-List.

In one embodiment, the first information block comprises a sdt-SRB2-Indication.

In one embodiment, the first information block is a sdt-DRB-List.

In one embodiment, the first information block is a sdt-SRB2-Indication.

In one embodiment, at least one of sdt or DRB or List or 1 or 2 is included in the name of the first information block.

In one embodiment, at least one of mbs or multicast or MRB or List or 1 or 2 is included in the name of the first information block.

In one embodiment, receive the third message prior to the first message.

In one embodiment, the third message is received before the first message is received.

In one embodiment, the third message comprises an RRC message.

In one embodiment, the third message is an RRC message.

In one embodiment, the third message is received via SRB1.

In one embodiment, the third message is transmitted on a Dedicated Control Channel (DCCH).

In one embodiment, the third message comprises at least one RRC IE.

In one embodiment, the third message comprises at least one RRC field.

In one embodiment, the third message is an RRCRelease message.

In one embodiment, the third message comprises a suspendConfig field.

In one embodiment, the third message comprises an RRC field, the RRC field being used to determine entry into or maintenance of the RRC inactive state.

In one embodiment, the third message comprises a suspendConfig field, the suspendConfig field being used to determine entry into or maintenance of the RRC inactive state.

In one embodiment, the third message indicates entry into or maintenance of the RRC inactive state.

In one embodiment, the third message indicates entry into the RRC inactive state.

In one embodiment, the third message indicates maintenance of the RRC inactive state.

In one embodiment, before the third message is received, the third message is used to determine to enter the RRC inactive state if the third message is in RRC_CONNECTED state.

In one embodiment, before the third message is received, if the third message is in RRC inactive state, the third message is used to determine to maintain the RRC inactive state.

In one embodiment, as a response to the third message being received, enter the RRC inactive state.

In one embodiment, as a response to the third message being received, maintain the RRC inactive state.

In one embodiment, as a response to the third message being received, the first node U01 is in the RRC inactive state.

In one embodiment, the first node U01 remains in the RRC inactive state during a time interval between the third message being received and the first message being received.

In one embodiment, the first node U01 does not transmit either of an RRCResumeRequest message or an RRCResumeRequest1 message during a time interval between the third message being received and the first message being received.

In one embodiment, as a response to the third message being received, suspend all signaling radio bearers (SRBs) other than SRB0, suspend all DRBs, and suspend all multicast MRBs.

In one embodiment, as a response to the third message being received, indicate PDCP suspend to lower layers of all DRBs.

### Embodiment 6

Embodiment 6 illustrates a schematic diagram of a second field in a second message being used to indicate that data transmission is performed in RRC inactive state according to one embodiment of the present application, as shown in FIG. 6.

In Embodiment 6, if the first message indicates that the first node performs data transmission in the RRC inactive state, a second field is used to indicate a data transmission performed in the RRC inactive state, the second field being associated to the second message; the first candidate value set and the second candidate value set are the same.

In one embodiment, receiving a first message in RRC inactive state, the first message comprising a first identifier, the first identifier being associated to the first node; and transmitting a second message as a response to the first message being received, the second message comprising an RRC connection resumption request message; and along with the second message, setting the first field in the second message to a first value, and determining whether each radio bearer in a first radio bearer set is to be resumed according to at least whether the first message indicates that the first node performs data transmission in the RRC inactive state, the first field being used to indicate a cause of an RRC connection resumption request; herein, the action of determining whether each radio bearer in a first radio bearer set is to be resumed according to at least whether the first message indicates that the first node performs data transmission in the RRC inactive state comprises: if the first message does not indicate that the first node performs data transmission in the RRC inactive state, not resuming each radio bearer in the first radio bearer set; if the first message indicates that the first node performs data transmission in the RRC inactive state, resuming each radio bearer in the first radio bearer set; if the first message indicates that the first node performs data transmission in the RRC inactive state, a second field is used to indicate a data transmission performed in the RRC inactive state, the second field being associated to the second message; the first radio bearer set comprises at least one of SRB2 or DRB(s) or multicast MRB(s); the first value is one value of a first candidate value set, the first candidate value set comprising at least one value.

In one embodiment, the phrase that a second field is used to indicate a data transmission performed in the RRC inactive state comprises: the second field, if present, being used to indicate a data transmission performed in the RRC inactive state.

In one embodiment, the phrase that a second field is used to indicate a data transmission performed in the RRC inactive state comprises: a value of the second field being set to a given value, the given value being used to indicate a data transmission performed in the RRC inactive state.

In one embodiment, the phrase the second field being associated to the second message comprises: the second field indicating the second message.

In one embodiment, the phrase the second field being associated to the second message comprises: the second field being set for the second message.

In one embodiment, the phrase the second field being associated to the second message comprises: the second message including the second field.

In one embodiment, the phrase the second field being associated to the second message comprises: the second message including the second field.

In one subembodiment, the second field is an RRC field.

In one subembodiment, the second field is a field in the second message.

In one subembodiment, the second field is a spare field in the second message.

In one subembodiment, the second field is a field after a resumeCause field in the second message.

In one subembodiment, the second field is a bit in the second message.

In one subembodiment, the second field is the last bit in the second message.

In one embodiment, the phrase the second field being associated to the second message comprises that the second message corresponds to a first SDU, the first SDU being a CCCH SDU; and a MAC subheader corresponding to the first SDU includes the second field.

In one subembodiment, the second field is a MAC field.

In one subembodiment, the second field is a field in a MAC subheader.

In one subembodiment, a MAC subheader corresponding to the first SDU comprises a LCID field, the LCID field being set to 0 or the LCID field being set to 52; the second field is not the LCID field.

In one subembodiment, the second field is a LCID field and the LCID field is not set to either of 0 or 52.

In one subembodiment, the second field is a LCID field and the LCID field is set to an integer not less than 37 and not greater than 43.

In one subembodiment, the second field is an eLCID field and the eLCID field is set to an integer not less than 0 and not greater than 227.

In one embodiment, the phrase the second field being associated to the second message comprises that the second message corresponds to a first SDU, the first SDU being a CCCH SDU; the second field is one field of a first MAC subPDU, the first MAC subPDU and a MAC subPDU corresponding to the first SDU belonging to a same MAC PDU.

In one subembodiment, the first MAC subPDU comprises a MAC subheader only, and the second field is one field of a MAC subheader in the first MAC subPDU.

In one subsidiary embodiment of the above subembodiment, the second field is a LCID field.

In one subsidiary embodiment of the above subembodiment, the second field is an eLCID field.

In one subembodiment, the first MAC subPDU comprises a MAC subheader and a MAC CE, and the second field is one field of a MAC CE in the first MAC subPDU.

In one embodiment, the first node receives a first message in RRC inactive state, the first message comprising a first identifier, the first identifier being associated to the first node, the first message not indicating that the first node performs data transmission in the RRC inactive state; as a response to the first message being received, transmitting a second message, the second message comprising an RRC connection resumption request message; along with the second message, setting a first field in the second message to a first value, and, not resuming each radio bearer in a first radio bearer set; the first field is used to indicate a cause of an RRC connection resumption request; the first value is one value of a first candidate value set, the first candidate value set comprising at least one value; the first radio bearer set comprises at least one of SRB2 or DRB(s) or multicast MRB(s).

In one embodiment, the first node receives a first message in RRC inactive state, the first message comprising a first identifier, the first identifier being associated to the first node, the first message indicating that the first node performs data transmission in the RRC inactive state; as a response to the first message being received, transmitting a second message, the second message comprising an RRC connection resumption request message; along with the second message, setting a first field in the second message to a second value, and, resuming each radio bearer in a first radio bearer set; the first field is used to indicate a cause of an RRC connection resumption request; the second value is one value of a second candidate value set, the second candidate value set comprising at least one value; the first radio bearer set comprises at least one of SRB2 or DRB(s) or multicast MRB(s); a second field is used to indicate a data transmission performed in the RRC inactive state, the second field being associated to the second message; the first candidate value set and the second candidate value set being the same.

In one embodiment, the first node receives a first message in RRC inactive state, the first message comprising a first identifier, the first identifier being associated to the first node, the first message indicating that the first node performs data transmission in the RRC inactive state; as a response to the first message being received, transmitting a second message, the second message comprising an RRC connection resumption request message; along with the second message, setting a first field in the second message to a first value, and, resuming each radio bearer in a first radio bearer set; the first field is used to indicate a cause of an RRC connection resumption request; the first value is one value of a first candidate value set, the first candidate value set comprising at least one value; the first radio bearer set comprises at least one of SRB2 or DRB(s) or multicast MRB(s); a second field is used to indicate a data transmission performed in the RRC inactive state, the second field being associated to the second message.

### Embodiment 7

Embodiment 7 illustrates a schematic diagram of a first field in a second message being set to a second value being used to indicate that data transmission is performed in RRC inactive state according to one embodiment of the present application, as shown in FIG. 7.

In Embodiment 7, if the first message indicates that the first node performs data transmission in the RRC inactive state, the first field in the second message being set to the second value is used to indicate performing of data transmission in the RRC inactive state; the first candidate value set and the second candidate value set are different.

In one embodiment, the first field in the second message being set to the first value indicates that no data transmission is performed in the RRC inactive state.

In one embodiment, the first field in the second message being set to the first value does not indicate that data transmission is performed in the RRC inactive state.

In one embodiment, the first node receives a first message in RRC inactive state, the first message comprising a first identifier, the first identifier being associated to the first node, the first message not indicating that the first node performs data transmission in the RRC inactive state; as a response to the first message being received, transmitting a second message, the second message comprising an RRC connection resumption request message; along with the second message, setting the first field in the second message to a first value, and, not resuming each radio bearer in the first radio bearer set; the first value is one value of a first candidate value set, the first candidate value set comprising at least one value; the first radio bearer set comprises at least one of SRB2 or DRB(s) or multicast MRB(s).

In one embodiment, the first node receives a first message in RRC inactive state, the first message comprising a first identifier, the first identifier being associated to the first node, the first message indicating that the first node performs data transmission in the RRC inactive state; as a response to the first message being received, transmitting a second message, the second message comprising an RRC connection resumption request message; along with the second message, setting the first field in the second message to a second value, and, resuming each radio bearer in the first radio bearer set; the second value is one value of a second candidate value set, the second candidate value set comprising at least one value; the first radio bearer set comprises at least one of SRB2 or DRB(s) or multicast MRB(s); the first field in the second message being set to the second value is used to indicate the performing of data transmission in the RRC inactive state.

### Embodiment 8

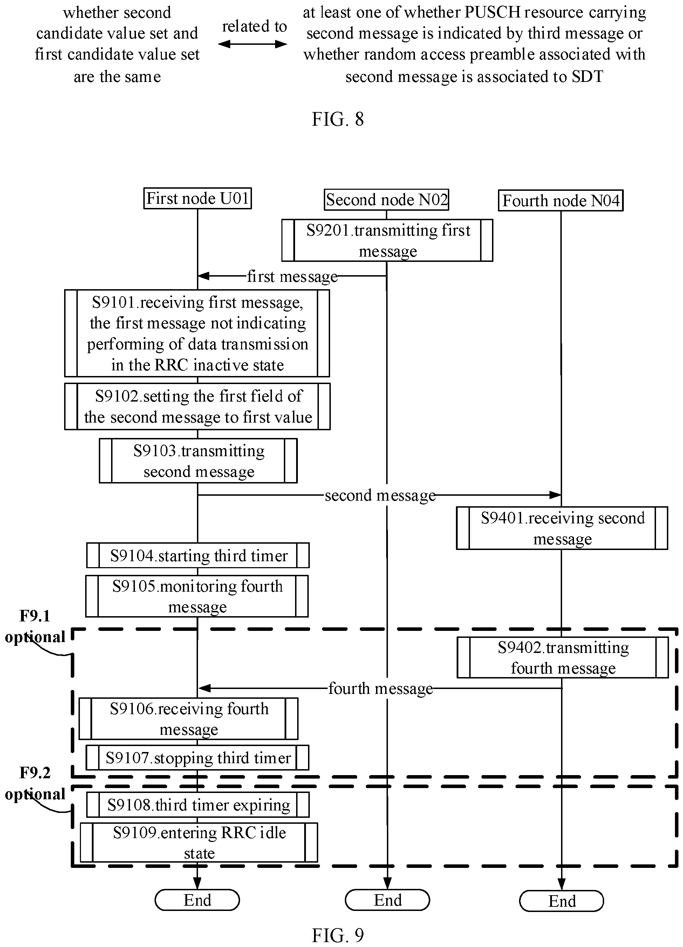

Embodiment 8 illustrates a schematic diagram showing whether a second candidate value set and a first candidate value set are the same being related to at least one of whether a PUSCH resource carrying at least a second message is indicated by a third message or whether a random access preamble associated with a second message is associated to an SDT, according to another embodiment of the present application, as shown in FIG. 8.

Embodiment 8 illustrates a schematic diagram showing whether a second candidate value set and a first candidate value set are the same being related to at least one of whether a PUSCH resource carrying at least a second message is indicated by a third message or whether a random access preamble associated with a second message is associated to an SDT, according to another embodiment of the present application, as shown in FIG. 8.

In one embodiment, if each condition in the first condition set is satisfied, a PUSCH resource carrying the second message is indicated by the third message.

In one embodiment, if at least one condition in the first condition set is not satisfied, a PUSCH resource carrying the second message is not indicated by the third message.

In one embodiment, the first condition set is used to determine whether a CG-SDT is triggered.

In one subembodiment, each condition in the first condition set being satisfied is used to determine that the second message triggers a CG-SDT.

In one subembodiment, if each condition in the first condition set is satisfied, the second message triggers a CG-SDT; if at least one condition in the first condition set is not satisfied, the second message does not trigger the CG-SDT.

In one subembodiment, if the second message triggers a CG-SDT, a PUSCH resource carrying the second message is indicated by the third message; if the second message does not trigger the CG-SDT, the PUSCH resource carrying the second message is not indicated by the third message.

In one subembodiment, one condition in the first condition set comprises: a CG-SDT being configured.

In one subsidiary embodiment of the above subembodiment, the CG-SDT being configured comprises: the third message indicating a CG-SDT resource.

In one subsidiary embodiment of the above subembodiment, the CG-SDT resource is of configured grant Type 1.

In one subsidiary embodiment of the above subembodiment, the CG-SDT being configured comprises: a SuspendConfig field in the third message including SDT-CG-Config or SDT-CG-Config-r17 or SDT-CG-Config-r18.

In one subsidiary embodiment of the above subembodiment, the CG-SDT being configured comprises: a SuspendConfig field in the third message including sdt-MAC-PHY-CG-Config or sdt-MAC-PHY-CG-Config-r17 or sdt-MAC-PHY-CG-Config-r18.

In one subsidiary embodiment of the above subembodiment, the CG-SDT being configured comprises: a SuspendConfig field in the third message including SDT-MAC-PHY-CG-Config or SDT-MAC-PHY-CG-Config-r17 or SDT-MAC-PHY-CG-Config-r18.

In one subsidiary embodiment of the above subembodiment, the CG-SDT being configured comprises: a SuspendConfig field in the third message including CG-SDT-TA-ValiditationConfig or CG-SDT-TA-ValiditationConfig-r17 or CG-SDT-TA ValiditationConfig-r18.

In one subembodiment, one condition in the first condition set comprises: the TA of the CG-SDT resource being valid.

In one subsidiary embodiment of the above subembodiment, a corresponding cg-SDT-TimeAlignmentTimer of the CG-SDT resource is running.

In one subsidiary embodiment of the above subembodiment, compared to a stored RSRP value, a current RSRP value is increased or decreased by a value that does not exceed a cg-SDT-RSRP-ChangeThreshold.

In one subembodiment, one condition in the first condition set comprises: at least one SSB configuring the CG-SDT having an SS-RSRP higher than cg-SDT-RSRP-ThresholdSSB.

In one subembodiment, one condition in the first condition set comprises: the SIB1 comprising sdt-ConfigCommon.

In one subembodiment, one condition in the first condition set comprises: the first node being configured with sdt-Config.

In one subembodiment, one condition in the first condition set comprises: a lower layer indicating that the condition for initiating a SDT is satisfied.

In one embodiment, if each condition in a second condition set is satisfied, a random access preamble associated with the second message is associated to a SDT.

In one embodiment, if at least one condition in the second condition set is not satisfied, a random access preamble associated with the second message is not associated to a SDT.

In one embodiment, the second condition set is used to determine whether a RA-SDT is triggered.

In one subembodiment, each condition in the second condition set being satisfied is used to determine that the second message triggers a RA-SDT.

In one subembodiment, if each condition in the second condition set is satisfied, the second message triggers a RA-SDT; if at least one condition in the second condition set is not satisfied, the second message does not trigger the RA-SDT.

In one subembodiment, if the second message triggers a RA-SDT, a random access preamble associated with the second message is associated to a SDT; if the second message does not trigger a RA-SDT, a random access preamble associated with the second message is associated to a SDT.

In one subembodiment, one condition in the second condition set comprises: the SIB1 comprising sdt-ConfigCommon.

In one subembodiment, one condition in the second condition set comprises: the first node being configured with sdt-Config.

In one subembodiment, one condition in the second condition set comprises: a lower layer indicating that the condition for initiating a SDT is satisfied.

In one embodiment, if a PUSCH resource carrying the second message is indicated by the third message, the second candidate value set is the same as the first candidate value set.

In one embodiment, if a random access preamble associated with the second message is associated to a SDT, the second candidate value set is the same as the first candidate value set.

In one embodiment, if a PUSCH resource carrying the second message is indicated by the third message, or if a random access preamble associated with the second message is associated to a SDT, the second candidate value set is the same as the first candidate value set.

In one embodiment, if a PUSCH resource carrying the second message is not indicated by the third message, and a random access preamble associated with the second message is not associated to a SDT, the second candidate value set is different from the first candidate value set.

In one embodiment, if each condition in the first condition set is satisfied, or, if each condition in the second condition set is satisfied, the second candidate value set is the same as the first candidate value set.

In one embodiment, if at least one condition in the first condition set is not satisfied, and at least one condition in the second condition set is not satisfied, the second candidate value set is different from the first candidate value set.

In one embodiment, if the second message triggers a CG-SDT, or, if the second message triggers a RA-SDT, the second candidate value set is the same as the first candidate value set.

In one embodiment, if the second message does not trigger a CG-SDT, and, the second message does not trigger a RA-SDT, the second candidate value set is different from the first candidate value set.

In one embodiment, receive a first message in RRC inactive state, the first message comprising a first identifier, the first identifier being associated to the first node, the first message indicating that the first node performs data transmission in the RRC inactive state; as a response to the first message being received, transmit a second message, the second message comprising an RRC connection resumption request message; along with the second message, set the first field in the second message to a second value, and, resume each radio bearer in the first radio bearer set; the first field is used to indicate a cause of an RRC connection resumption request; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value; the second candidate value set is different from the first candidate value set; a PUSCH resource carrying the second message is not indicated by the third message, and a random access preamble associated with the second message is not associated to a SDT.

In one embodiment, receive a first message in RRC inactive state, the first message comprising a first identifier, the first identifier being associated to the first node, the first message indicating that the first node performs data transmission in the RRC inactive state; as a response to the first message being received, transmit a second message, the second message comprising an RRC connection resumption request message; along with the second message, set the first field in the second message to a second value, and, resume each radio bearer in the first radio bearer set; the first field is used to indicate a cause of an RRC connection resumption request; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value; the second candidate value set is the same as the first candidate value set; a PUSCH resource carrying the second message is indicated by the third message, or, if a random access preamble associated with the second message is associated to a SDT.

### Embodiment 9

Embodiment 9 illustrates a flowchart of radio signal transmission according to another embodiment of the present application, as shown in FIG. 9. It should be particularly noted that the sequence illustrated herein does not set any limit to the signal transmission order or implementation order in the present application.

A **first node U01**, in step S9101, receives a first message in RRC inactive state, the first message comprising a first identifier, the first identifier being associated to the first node U01, the first message not indicating that the first node U01 performs data transmission in the RRC inactive state; in step S9102, along with the second message, sets the first field of the second message to a first value, the first field being used to indicate a cause of an RRC connection resumption request; in step S9103, as a response to the first message being received, transmits a second message, the second message comprising an RRC connection resumption request message; in step S9104, starts the third timer before the second message is delivered to a protocol layer below the RRC layer; in step S9105, monitors a fourth message during the time while the first timer is running, as a response to the second message being transmitted; in step S9106, receives a fourth message; in step S9107, stops the third timer in case of reception of a fourth message; in step S9108, the third timer expires; in step S9109, as a response to the expiration of the third timer, enters the RRC idle state.

A **second node N02** transmits the first message in step S9201.

A **fourth node N04** receives the second message in step S9401; and transmits the fourth message in step S9402.

In Embodiment 9, the first radio bearer set comprises at least one of SRB2 or DRB(s) or multicast MRB(s); the first value is one value of a first candidate value set, the first candidate value set comprising at least one value.

In one embodiment, the second message triggers the start of the third timer.

In one embodiment, the third timer is an RRC layer timer.

In one embodiment, the third timer is a T319.

In one embodiment, the third timer is stopped if cell reselection is performed.

In one embodiment, the third timer is stopped if relay selection or relay reselection is performed.

In one embodiment, the dashed-line box F9.1 is optional.

In one embodiment, the dashed-line box F9.1 exists.

In one subembodiment, the fourth message is an RRC message.

In one subembodiment, the fourth message is an RRC response to the second message.

In one subembodiment, the fourth message is any one of an RRCResume message or an RRCSetup message or an RRCRelease message or an RRCRelease message carrying suspendConfig or an RRCReject message.

In one embodiment, the dashed-line box F9.1 does not exist.

In one embodiment, the dashed-line box F9.2 is optional.

In one embodiment, the dashed-line box F9.2 exists.

In one embodiment, the dashed-line box F9.2 does not exist.

In one embodiment, the dashed-line box F9.1 and the dashed-line box F9.2 cannot co-exist.

### Embodiment 10

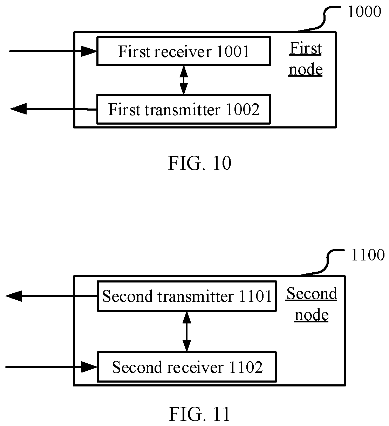

Embodiment 10 illustrates a structure block diagram of a processing device used in a first node according to one embodiment of the present application, as shown in FIG. 10. In FIG. 10, a processing device 1000 in a first node is comprised of a first receiver 1001 and a first transmitter 1002.

The first receiver 1001 receives a first message in RRC inactive state, the first message comprising a first identifier, the first identifier being associated to the first node; and

the first transmitter 1002 transmits a second message as a response to the first message being received, the second message comprising an RRC connection resumption request message; and along with the second message, sets a first field in the second message and determines whether each radio bearer in a first radio bearer set is to be resumed according to at least whether the first message indicates that the first node performs data transmission in the RRC inactive state, the first field being used to indicate a cause of an RRC connection resumption request.

In Embodiment 10, the action of setting a first field in the second message and determining whether each radio bearer in a first radio bearer set is to be resumed according to at least whether the first message indicates that the first node performs data transmission in the RRC inactive state comprises: if the first message does not indicate that the first node performs data transmission in the RRC inactive state, setting the first field in the second message to a first value, and, not resuming each radio bearer in the first radio bearer set; if the first message indicates that the first node performs data transmission in the RRC inactive state, setting the field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

In one embodiment, the first receiver 1001 receives a third message prior to the first message, the third message indicating the first radio bearer set; herein, the third message is used to determine to enter or maintain the RRC inactive state.

In one embodiment, if the first message indicates that the first node performs data transmission in the RRC inactive state, a second field is used to indicate a data transmission performed in the RRC inactive state, the second field being associated to the second message; the first candidate value set and the second candidate value set are the same.

In one embodiment, if the first message indicates that the first node performs data transmission in the RRC inactive state, the first field in the second message being set to the second value is used to indicate performing of data transmission in the RRC inactive state; the first candidate value set and the second candidate value set are different.

In one embodiment, if the first message indicates that the first node performs data transmission in the RRC inactive state, whether or not the second candidate value set and the first candidate value set are the same is related to at least one of whether or not a PUSCH resource carrying at least the second message is indicated by the third message or whether or not a random access preamble associated with the second message is associated to an SDT.

In one embodiment, the first receiver 1001, in case that the first message indicates that the first node performs data transmission in the RRC inactive state, monitors a fourth message during the time while a first timer is running as a response to the second message being transmitted; in case of reception of a fourth message, stops the first timer; and enters RRC idle state in case of expiration of the first timer; herein, the fourth message is not associated to any radio bearer in the first radio bearer set.

In one embodiment, the first transmitter 1002 starts the first timer along with the second message.

In one embodiment, the first receiver 1001 receives a first data block after the second message is transmitted; and starts or restarts a second timer as a response to the first data block being received; herein, the first data block is associated to one radio bearer in the first radio bearer set.

In one embodiment, the first receiver 1001 comprises the antenna 452, the receiver 454, the multi-antenna receiving processor 458, the receiving processor 456, the controller/processor 459, the memory 460 and the data source 467 in FIG. 4 of the present application.

In one embodiment, the first receiver 1001 comprises the antenna 452, the receiver 454, the multi-antenna receiving processor 458 and the receiving processor 456 in FIG. 4 of the present application.

In one embodiment, the first receiver 1001 comprises the antenna 452, the receiver 454 and the receiving processor 456 in FIG. 4 of the present application.

In one embodiment, the first transmitter 1002 comprises the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1002 comprises the antenna 452, the transmitter 454, the multi-antenna transmitting processor 457 and the transmitting processor 468 in FIG. 4 of the present application.

In one embodiment, the first transmitter 1002 comprises the antenna 452, the transmitter 454 and the transmitting processor 468 in FIG. 4 of the present application.

### Embodiment 11

Embodiment 11 illustrates a structure block diagram of a processing device used in a second node according to one embodiment of the present application, as shown in FIG. 11. In FIG. 11, a processing device 1100 in a second node is comprised of a second transmitter 1101 and a second receiver 1102.

The second transmitter 1101 transmits a first message, the first message comprising a first identifier, the first identifier being associated to a receiver of the first message; and

the second receiver 1102 receives a second message as a response to the first message being transmitted, the second message comprising an RRC connection resumption request message.

In Embodiment 11, the receiver of the first message receives the first message in an RRC inactive state; along with the second message, at least whether the first message indicates that the receiver of the first message performs data transmission in the RRC inactive state is used by the receiver of the first message to set a first field in the second message and determine whether each radio bearer in a first radio bearer set is to be resumed, the first field being used to indicate a cause of an RRC connection resumption request; the phrase at least whether the first message indicates that the receiver of the first message performs data transmission in the RRC inactive state is used by the receiver of the first message to set a first field in the second message and determine whether each radio bearer in a first radio bearer set is to be resumed comprises: the first message not indicating that the receiver of the first message performs data transmission in the RRC inactive state being used to determine to set the first field in the second message to a first value, and, not resuming each radio bearer in the first radio bearer set; the first message indicating that the receiver of the first message performs data transmission in the RRC inactive state being used to determine to set the first field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

In one embodiment, a third message is transmitted prior to the first message, the third message indicating the first radio bearer set; the third message is used to determine to enter or maintain the RRC inactive state.

In one embodiment, the second transmitter 1101 transmits the third message.

In one embodiment, a receiver of the third message is a receiver of the first message.

In one embodiment, if the first message indicates that the receiver of the first message performs data transmission in the RRC inactive state, a second field is used to indicate a data transmission performed in the RRC inactive state, the second field being associated to the second message; the first candidate value set and the second candidate value set are the same.

In one embodiment, if the first message indicates that the receiver of the first message performs data transmission in the RRC inactive state, the first field in the second message being set to the second value is used to indicate performing of data transmission in the RRC inactive state; the first candidate value set and the second candidate value set are different.

In one embodiment, if the first message indicates that the receiver of the first message performs data transmission in the RRC inactive state, whether or not the second candidate value set and the first candidate value set are the same is related to at least one of whether or not a PUSCH resource carrying at least the second message is indicated by the third message or whether or not a random access preamble associated with the second message is associated to an SDT.

In one embodiment, the second transmitter 1101, in case that the first message indicates that a receiver of the first message performs data transmission in the RRC inactive state, determines whether a fourth message is to be transmitted, as a response to the second message being received; herein, the fourth message is monitored by the receiver of the first message while the first timer is running; the first timer is stopped if the fourth message is received by the receiver of the first message; if the first timer expires, the receiver of the first message enters the RRC idle state; and the fourth message is not associated to any radio bearer in the first radio bearer set.

In one embodiment, along with the second message, the first timer is started by the receiver of the first message.

In one embodiment, the second transmitter 1101 transmits a first data block after the second message is received; herein, as a response to the first data block being received by a receiver of the first message, a second timer is started or restarted by the receiver of the first message; the first data block is associated to one radio bearer in the first radio bearer set.

In one embodiment, the second transmitter 1101 comprises the antenna 420, the transmitter 418, the multi-antenna transmitting processor 471, the transmitting processor 416, the controller/processor 475 and the memory 476 in FIG. 4 of the present application.

In one embodiment, the second transmitter 1101 comprises the antenna 420, the transmitter 418, the multi-antenna transmitting processor 471 and the transmitting processor 416 in FIG. 4 of the present application.

In one embodiment, the second transmitter 1101 comprises the antenna 420, the transmitter 418 and the transmitting processor 416 in FIG. 4 of the present application.

In one embodiment, the second receiver 1102 comprises the antenna 420, the receiver 418, the multi-antenna receiving processor 472, the receiving processor 470, the controller/processor 475 and the memory 476 in FIG. 4 of the present application.

In one embodiment, the second receiver 1102 comprises the antenna 420, the receiver 418, the multi-antenna receiving processor 472 and the receiving processor 470 in FIG. 4 of the present application.

In one embodiment, the second receiver 1102 comprises the antenna 420, the receiver 418 and the receiving processor 470 in FIG. 4 of the present application.

### Embodiment 12

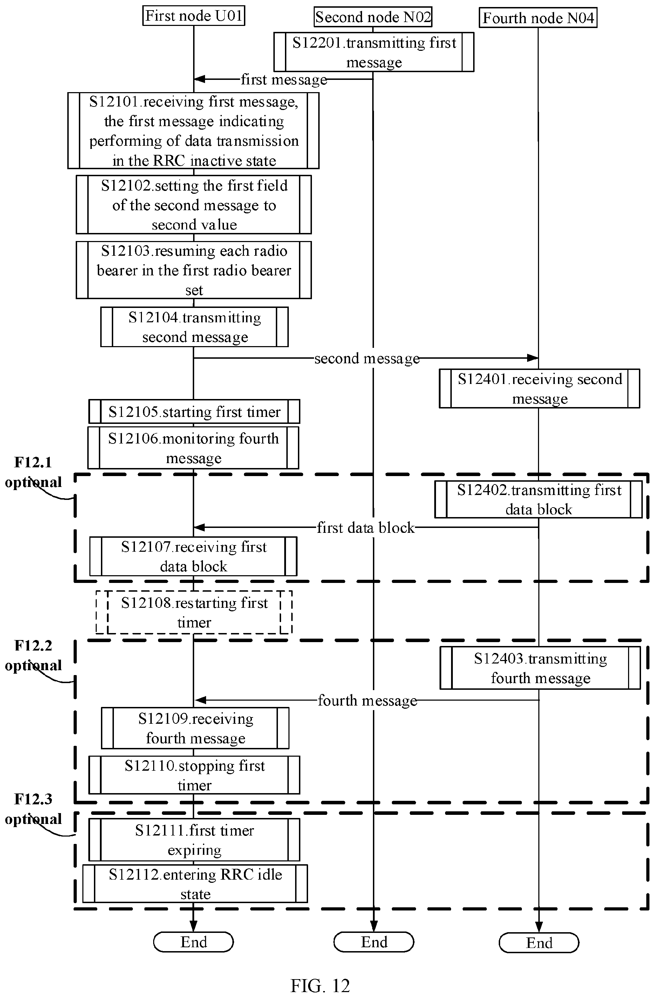

Embodiment 12 illustrates a flowchart of radio signal transmission according to a third embodiment of the present application, as shown in FIG. 12. It should be particularly noted that the sequence illustrated herein does not set any limit to the signal transmission order or implementation order in the present application.

A **first node U01**, in step S12101, receives a first message in RRC inactive state, the first message comprising a first identifier, the first identifier being associated to the first node U01, the first message indicating that the first node U01 performs data transmission in the RRC inactive state; in step S12102, along with the second message, sets the first field of the second message to a second value, the first field being used to indicate a cause of an RRC connection resumption request; in step S12103, resumes each radio bearer in the first radio bearer set; and in step S12104, as a response to the first message being received, transmits a second message, the second message comprising an RRC connection resumption request message; in step S12105, starts the first timer along with the second message; in step S12106, monitors a fourth message during the time while the first timer is running, as a response to the second message being transmitted; in step S12107, receives a first data block after the second message is transmitted; in step S12108, restarts the first timer as a response to the first data block being received; in step S12109, receives a fourth message; in step S12110, stops the first timer in case of reception of the fourth message; in step S12111, the first timer expires; in step S12112, in case of the expiration of the first timer, enters the RRC idle state.

A **second node N02** transmits the first message in step S12201.

A **fourth node N04** receives the second message in step S12401; transmits the first data block in step S12402; and transmits the fourth message in step S12403.

In Embodiment 12, the first radio bearer set comprises at least one of SRB2 or DRB(s) or multicast MRB(s); the second value is one value of a second candidate value set, the second candidate value set comprising at least one value; the fourth message is not associated to any radio bearer in the first radio bearer set; the first data block is associated to one radio bearer in the first radio bearer set.

In one embodiment, the second candidate value set is the first candidate value set.

In one embodiment, the second candidate value set is not the first candidate value set.

In one embodiment, the dashed-line box F12.1 is optional.

In one embodiment, the dashed-line box F12.1 exists.

In one subembodiment, the first packet is received.

In one embodiment, the dashed-line box F12.1 does not exist.

In one subembodiment, the first packet is not received.

In one subembodiment, the first packet is not received before the first timer expires.

In one embodiment, the dashed-line box F12.2 is optional.

In one embodiment, the dashed-line box F12.2 exists.

In one subembodiment, as a response to receiving the fourth message, stopping the first timer.

In one subembodiment, receiving the fourth message, and as a response to receiving the fourth message, stopping the first timer.

In one subembodiment, the first packet is received during a time interval between the second message being received and the fourth message being received.

In one subembodiment, the first timer is in a time interval between the second message being received and the fourth message being received, the first timer not being restarted.

In one subembodiment, the first timer is in a time interval between the second message being received and the fourth message being received, the first timer being restarted.

In one embodiment, the dashed-line box F12.2 does not exist.

In one embodiment, the dashed-line box F12.3 is optional.

In one embodiment, the dashed-line box F12.3 exists.

In one subembodiment, enter the RRC idle state as a response to the expiration of the first timer.

In one subembodiment, enter the RRC idle state when the first timer expires.

In one subembodiment, the RRC idle state is an RRC_IDLE state.

In one embodiment, the dashed-line box F12.3 does not exist.

In one embodiment, the dashed-line box F12.2 and the dashed-line box F12.3 cannot co-exist.

In one embodiment, the step S12108 is optional.

In one embodiment, the step S12108 exists.

In one subembodiment, the first data block being received is used to trigger a restart of the first timer.

In one subembodiment, restart the first timer when the first data block is received.

In one subembodiment, transmit an indication to the RRC layer when the first data block is received, and restarting the first timer when the RRC layer has received the indication.

In one subembodiment, the first data block is user-plane data.

In one subembodiment, the first data block is control-plane data.

In one subembodiment, one radio bearer in the first radio bearer set is used for carrying the first data block.

In one subembodiment, the first data block is mapped to one radio bearer in the first radio bearer set.

In one subembodiment, the first data block is transmitted via one radio bearer in the first radio bearer set.

In one subembodiment, the first data block belongs to one radio bearer in the first radio bearer set.

In one subembodiment, the first data block is a PDCP layer packet.

In one subembodiment, the first data block is an RLC layer packet.

In one subembodiment, the first data block is a MAC layer packet.

In one embodiment, the step S12108 does not exist.

In one subembodiment, the first data block being received is not used to trigger the restart of the first timer.

In one subembodiment, as a response to the first data block being received, the first timer is not restarted.

In one embodiment, the second message triggers the start of the first timer.

In one embodiment, being along with the second message is related to the RRC layer transmitting the second message.

In one embodiment, being along with the second message is related to the MAC layer transmitting the first SDU.

In one embodiment, being along with the second message is related to the second message being transmitted via an air interface.

In one embodiment, being along with the second message means when the second message is transmitted.

In one embodiment, being along with the second message means before the second message is transmitted.

In one embodiment, being along with the second message means the process in which the content of the second message is being configured.

In one embodiment, being along with the second message means when the MAC layer is transmitting the first SDU.

In one embodiment, the first timer is an RRC layer timer.

In one embodiment, the first timer is configurable.

In one embodiment, the first timer is T319.

In one embodiment, the first timer is T319a.

In one embodiment, the first timer is T319b.

In one embodiment, a maximum value of the first timer is configurable.

In one embodiment, a maximum value of the first timer is pre-configured.

In one embodiment, a maximum value of the first timer is configured by an RRC field.

In one embodiment, a SIB1 message is used to configure the first timer.

In one embodiment, an RRC field in the SIB1 message is used to configure the first timer.

In one embodiment, a ue-TimersAndConstants field in the SIB1 message is used to configure the first timer.

In one embodiment, an SDT-ConfigCommonSIB field in the SIB1 message is used to configure the first timer.

In one embodiment, the monitoring includes to monitor.

In one embodiment, the monitoring includes to decode.

In one embodiment, the monitoring includes to check by means of Cyclic Redundancy Check (CRC).

In one embodiment, the monitoring includes to detect.

In one embodiment, the action monitoring the fourth message includes: monitoring on a PDCCH a DCI that is scrambled by a C-RNTI, the C-RNTI being used to schedule a PDSCH, the PDSCH being used for carrying the fourth message.

In one embodiment, the action monitoring the fourth message includes: monitoring on a PDCCH a DCI that is scrambled by a TC-RNTI, the TC-RNTI being used to schedule a PDSCH, the PDSCH being used for carrying the fourth message.

In one embodiment, the action monitoring the fourth message during the time while the first timer is running includes: monitoring the fourth message when the first timer is running.

In one embodiment, the action monitoring the fourth message during the time while the first timer is running includes: monitoring the fourth message if the first timer is running.

In one embodiment, the fourth message is an RRC message.

In one embodiment, the fourth message is an RRC response to the second message.

In one embodiment, the fourth message is associated to SRB1.

In one embodiment, the fourth message is associated to SRB0.

In one embodiment, SRB0 is used for carrying the fourth message.

In one embodiment, SRB1 is used for carrying the fourth message.

In one embodiment, the fourth message is associated to SRB1 or SRB0.

In one embodiment, the fourth message is any one of an RRCResume message or an RRCSetup message or an RRCRelease message or an RRCRelease message carrying suspendConfig or an RRCReject message.

In one embodiment, any radio bearer in the first radio bearer set is not used for carrying the fourth message.

In one embodiment, the first data block is a first one of data blocks to be associated to one radio bearer in the first radio bearer set that is received after the second message is transmitted.

In one embodiment, the action of starting a first timer means that the timer starts timing.

In one embodiment, the action of starting a first timer means that the timer starts positive timing from 0.

In one embodiment, the action of starting a first timer means that the timer starts counting down from a maximum value of the timer.

In one embodiment, a timer expires when the timing of the timer is equal to 0.

In one embodiment, a timer expires when the timing of the timer is equal to a maximum value of the timer.

In one embodiment, a timer expires when the running time of the timer reaches the maximum value of the timer.

In one embodiment, the word reaching includes "being equal to".

In one embodiment, the word reaching includes "equal to" or "greater than".

In one embodiment, the above timer includes the first timer.

In one embodiment, the above timer includes the second timer.

In one embodiment, the above timer includes the third timer of this application.

In one embodiment, the action of restarting a timer means that the timer restarts timing.

In one embodiment, the action of restarting a timer means: resetting the timer to a start value.

In one embodiment, the action of restarting a timer means that the timer restarts positive timing from 0.

In one embodiment, the action of restarting a timer means that the timer restarts counting down from the maximum value of the timer.

### Embodiment 13

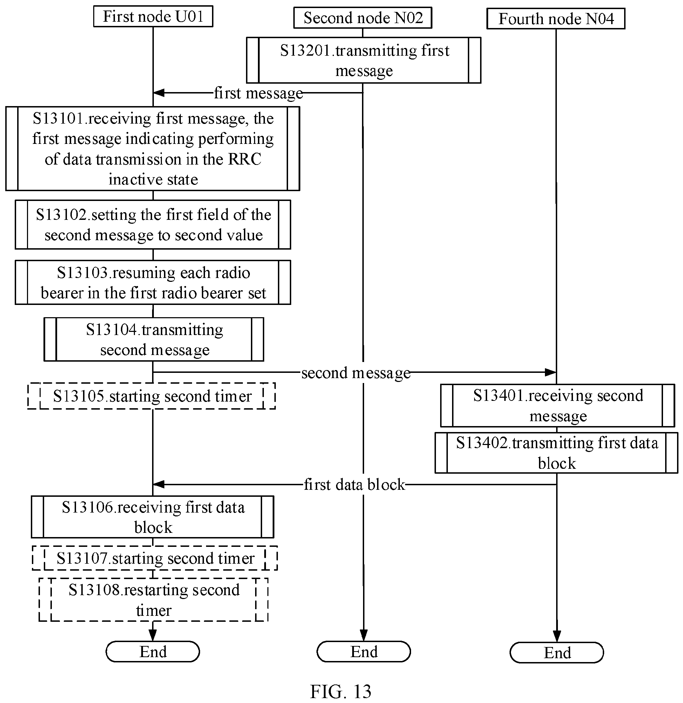

Embodiment 13 illustrates a flowchart of radio signal transmission according to a fourth embodiment of the present application, as shown in FIG. 13. It should be particularly noted that the sequence illustrated herein does not set any limit to the signal transmission order or implementation order in the present application.

A **first node U01**, in step S13101, receives a first message in RRC inactive state, the first message comprising a first identifier, the first identifier being associated to the first node U01, the first message indicating that the first node U01 performs data transmission in the RRC inactive state; in step S13102, along with the second message, sets the first field of the second message to a second value, the first field being used to indicate a cause of an RRC connection resumption request; in step S13103, resumes each radio bearer in the first radio bearer set; and in step S13104, as a response to the first message being received, transmits a second message, the second message comprising an RRC connection resumption request message; in step S13103, starts a second timer; in step S13106, receives a first data block; in step S13107, starts the second timer as a response to the first data block being received; and in step S13108, restarts the second timer as a response to the first data block being received.

A **second node N02** transmits the first message in step S13201.

A **fourth node N04** receives the second message in step S13401; and transmits the first data block in step S13402.

In Embodiment 13, the first radio bearer set comprises at least one of SRB2 or DRB(s) or multicast MRB(s); the second value is one value of a second candidate value set, the second candidate value set comprising at least one value; the first data block is associated to one radio bearer in the first radio bearer set.

In one embodiment, the second candidate value set is the first candidate value set.

In one embodiment, the second candidate value set is not the first candidate value set.

In one embodiment, receive a first data block after the second message is transmitted.

In one embodiment, receive a first data block after the second message is transmitted; and start or restart a second timer as a response to the first data block being received; herein, the first data block is associated to one radio bearer in the first radio bearer set.

In one embodiment, the second timer is a MAC layer timer.

In one embodiment, the second timer is a dataInactivityTimer.

In one embodiment, the second timer performing data transmission in the RRC inactive state is maintained.

In one embodiment, start the second timer after the second message has been transmitted.

In one embodiment, start the second timer after the second message is handed over to the MAC layer.

In one embodiment, the step S13105 is optional.

In one embodiment, the step S13105 exists.

In one embodiment, the step S13105 does not exist.

In one embodiment, the step S13107 is optional.

In one embodiment, the step S13107 exists.

In one embodiment, the step S13107 does not exist.

In one embodiment, the step S13108 is optional.

In one embodiment, the step S13108 exists.

In one embodiment, the step S13108 does not exist.

In one embodiment, the step S13105 and the step S13108 are present and the step S13107 is absent.

In one subembodiment, the second timer is started before the first data block is received.

In one subembodiment, start the second timer as a response to a MAC entity transmitting the first SDU.

In one subembodiment, restart the second timer as a response to the first data block being received.

In one subembodiment, restart the second timer as a response to a MAC entity receiving a second SDU; the first data block corresponds to the second SDU.

In one embodiment, the step S13107 exists while the step S13105 and the step S13108 do not exist.

In one embodiment, the second timer is not started before the first data block is received.

In one subembodiment, start the second timer as a response to the first data block being received.

In one subembodiment, start the second timer as a response to a MAC entity receiving a second SDU; the first data block corresponds to the second SDU.

In one embodiment, the second SDU is one of a DTCH (i.e., Dedicated Traffic Channel) SDU or a DCCH SDU or a multicast MTCH SDU.

In one embodiment, the second SDU is one of a DTCH SDU or a DCCH SDU.

In one embodiment, the second SDU is one of multicast MTCH (i.e., MBS Traffic Channel) SDUs.

In one embodiment, the second SDU is one of a DCCH SDU or a multicast MTCH SDU.

In one embodiment, if the radio bearer associated with the first data block is a DRB, the second SDU is a DTCH SDU.

In one embodiment, if the radio bearer associated with the first data block is SRB2, the second SDU is a DCCH SDU.

In one embodiment, if the radio bearer associated with the first data block is a multicast MRB, the second SDU is a multicast MTCH SDU.

In one embodiment, along with the second message, the first timer is not started.

In one embodiment, along with the second message, the first timer is started; and as a response to the first data block being received, stop the first timer.

In one embodiment, an SDU being a DTCH SDU means that the SDU is for a DTCH logical channel.

In one embodiment, an SDU being a DCCH SDU means that the SDU is for a DCCH logical channel.

In one embodiment, an SDU being a multicast MTCH SDU means that the SDU is for a multicast MTCH logical channel.

In one embodiment, the first data block is a first one of data blocks to be associated to one radio bearer in the first radio bearer set that is received after the second message is transmitted.

In one embodiment, after the second message is transmitted, a first DCI (i.e., Downlink Control Information) is received, the first DCI being scrambled by a first Radio Network Temporary Identifier (RNTI); the first DCI indicates scheduling information for a Physical downlink shared channel (PDSCH), the PDSCH being used for carrying at least the first data block.

In one embodiment, the first RNTI is a Cell RNTI (C-RNTI).

In one embodiment, the format of the first DCI is DCI format 1_0.

In one embodiment, the first RNTI is TC-RNTI; the first data block and a UE Contention Resolution Identity MAC CE (Control Element) belong to a same MAC PDU, where a UE Contention Resolution Identity in the UE Contention Resolution Identity MAC CE matches a CCCH SDU corresponding to the second message.

In one subembodiment, a PDSCH indicated by the first DCI is used to carry the first data block and the UE Contention Resolution Identity MAC CE.

In one subembodiment, as a response to the UE Contention Resolution Identity MAC CE being successfully received, a random access procedure associated with the second message is considered to be successfully completed.

In one embodiment, the first RNTI is MSGB-RNTI; the first data block and successRAR belong to a same MAC PDU, and a UE Contention Resolution Identity in the successRAR matches a CCCH SDU corresponding to the second message.

In one subembodiment, a PDSCH indicated by the first DCI is used to carry the first data block and one successRAR.

In one subembodiment, as a response to the successRAR being successfully received, a random access procedure associated with the second message is considered to be successfully completed.

In one embodiment, along with the second message, the first timer in this application is not started.

In one embodiment, along with the second message, start the first timer; and as a response to a random access procedure associated with the second message being successfully completed, stop the first timer.

In one embodiment, along with the second message, start the first timer; and as a response to the first data block being received, stop the first timer.

In one embodiment, along with the second message, start the first timer; and as a response to a MAC entity receiving a second SDU, stop the first timer; the first data block corresponds to the second SDU.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The UE and terminal in the present application include but are not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things (IOT), RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

## Claims

1. A first node for wireless communications, comprising:
a first receiver, receiving a first message in RRC inactive state, the first message comprising a first identifier, the first identifier being associated to the first node; and
a first transmitter, transmitting a second message as a response to the first message being received, the second message comprising an RRC connection resumption request message; and along with the second message, setting a first field in the second message and determining whether each radio bearer in a first radio bearer set is to be resumed according to at least whether the first message indicates that the first node performs data transmission in the RRC inactive state, the first field being used to indicate a cause of an RRC connection resumption request;
wherein the action of setting a first field in the second message and determining whether each radio bearer in a first radio bearer set is to be resumed according to at least whether the first message indicates that the first node performs data transmission in the RRC inactive state comprises: if the first message does not indicate that the first node performs data transmission in the RRC inactive state, setting the first field in the second message to a first value, and, not resuming each radio bearer in the first radio bearer set; if the first message indicates that the first node performs data transmission in the RRC inactive state, setting the field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

2. The first node according to claim 1, **characterized in** comprising:
the first receiver, receiving a third message prior to the first message, the third message indicating the first radio bearer set;
wherein the third message is used to determine to enter or maintain the RRC inactive state.

3. The first node according to claim 1 or 2, **characterized in that** if the first message indicates that the first node performs data transmission in the RRC inactive state, a second field is used to indicate performing of data transmission in the RRC inactive state, the second field being associated to the second message; the first candidate value set and the second candidate value set are the same.

4. The first node according to claim 1 or 2, **characterized in that** if the first message indicates that the first node performs data transmission in the RRC inactive state, the first field in the second message being set to the second value is used to indicate performing of data transmission in the RRC inactive state; the first candidate value set and the second candidate value set are different.

5. The first node according to claim 2, **characterized in that** if the first message indicates that the first node performs data transmission in the RRC inactive state, whether or not the second candidate value set and the first candidate value set are the same is related to at least one of whether or not a PUSCH resource carrying at least the second message is indicated by the third message or whether or not a random access preamble associated with the second message is associated to an SDT.

6. The first node according to any of claims 1-5, **characterized in** comprising:
the first receiver, in case that the first message indicates that the first node performs data transmission in the RRC inactive state, monitoring a fourth message during the time while a first timer is running as a response to the second message being transmitted; in case of reception of a fourth message, stopping the first timer; and entering RRC idle state in case of expiration of the first timer;
wherein the fourth message is not associated to any radio bearer in the first radio bearer set.

7. The first node according to claim 6, **characterized in** comprising:
the first transmitter, along with the second message, starting the first timer.

8. The first node according to claim 6 or 7, **characterized in** comprising:
the first receiver, receiving a first data block after the second message is transmitted; and starting or restarting a second timer as a response to the first data block being received;
wherein the first data block is associated to one radio bearer in the first radio bearer set.

9. A second node for wireless communications, comprising:
a second transmitter, transmitting a first message, the first message comprising a first identifier, the first identifier being associated to a receiver of the first message; and
a second receiver, receiving a second message as a response to the first message being transmitted, the second message comprising an RRC connection resumption request message;
wherein the receiver of the first message receives the first message in an RRC inactive state; along with the second message, at least whether the first message indicates that the receiver of the first message performs data transmission in the RRC inactive state is used by the receiver of the first message to set a first field in the second message and determine whether each radio bearer in a first radio bearer set is to be resumed, the first field being used to indicate a cause of an RRC connection resumption request; the phrase at least whether the first message indicates that the receiver of the first message performs data transmission in the RRC inactive state is used by the receiver of the first message to set a first field in the second message and determine whether each radio bearer in a first radio bearer set is to be resumed comprises: the first message not indicating that the receiver of the first message performs data transmission in the RRC inactive state being used to determine to set the first field in the second message to a first value, and, not resuming each radio bearer in the first radio bearer set; the first message indicating that the receiver of the first message performs data transmission in the RRC inactive state being used to determine to set the first field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

10. A method in a first node for wireless communications, comprising:
receiving a first message in RRC inactive state, the first message comprising a first identifier, the first identifier being associated to the first node; and
transmitting a second message as a response to the first message being received, the second message comprising an RRC connection resumption request message; and along with the second message, setting a first field in the second message and determining whether each radio bearer in a first radio bearer set is to be resumed according to at least whether the first message indicates that the first node performs data transmission in the RRC inactive state, the first field being used to indicate a cause of an RRC connection resumption request;
wherein the action of setting a first field in the second message and determining whether each radio bearer in a first radio bearer set is to be resumed according to at least whether the first message indicates that the first node performs data transmission in the RRC inactive state comprises: if the first message does not indicate that the first node performs data transmission in the RRC inactive state, setting the first field in the second message to a first value, and, not resuming each radio bearer in the first radio bearer set; if the first message indicates that the first node performs data transmission in the RRC inactive state, setting the field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.

11. A method in a second node for wireless communications, comprising:
transmitting a first message, the first message comprising a first identifier, the first identifier being associated to a receiver of the first message; and
receiving a second message as a response to the first message being transmitted, the second message comprising an RRC connection resumption request message;
wherein the receiver of the first message receives the first message in an RRC inactive state; along with the second message, at least whether the first message indicates that the receiver of the first message performs data transmission in the RRC inactive state is used by the receiver of the first message to set a first field in the second message and determine whether each radio bearer in a first radio bearer set is to be resumed, the first field being used to indicate a cause of an RRC connection resumption request; the phrase at least whether the first message indicates that the receiver of the first message performs data transmission in the RRC inactive state is used by the receiver of the first message to set a first field in the second message and determine whether each radio bearer in a first radio bearer set is to be resumed comprises: the first message not indicating that the receiver of the first message performs data transmission in the RRC inactive state being used to determine to set the first field in the second message to a first value, and, not resuming each radio bearer in the first radio bearer set; the first message indicating that the receiver of the first message performs data transmission in the RRC inactive state being used to determine to set the first field in the second message to a second value, and, resuming each radio bearer in the first radio bearer set; the first radio bearer set comprises at least one of SRB2 or DRB(s) or multicast MRB(s); the first value is one value of a first candidate value set, the first candidate value set comprising at least one value; the second value is one value of a second candidate value set, the second candidate value set comprising at least one value.
